(19) Europäisches Patentamt
European Patent Office
Office européen des brevets

(11) EP 3 847 308 B1

(12) EUROPÄISCHE PATENTSCHRIFT

(45) Veröffentlichungstag und Bekanntmachung des Hinweises auf die Patenterteilung:
**06.04.2022 Patentblatt 2022/14**

(21) Anmeldenummer: **20751547.9**

(22) Anmeldetag: **05.08.2020**

(51) Internationale Patentklassifikation (IPC):
***D06M 13/203*** (2006.01) ***D06M 13/224*** (2006.01)
***D06M 13/148*** (2006.01) ***D06M 15/564*** (2006.01)
***D06M 13/00*** (2006.01) ***D06N 3/14*** (2006.01)
***G21F 1/12*** (2006.01) ***B32B 37/00*** (2006.01)
***D06N 3/00*** (2006.01) ***D06M 15/507*** (2006.01)
***D06M 15/643*** (2006.01) ***D06M 13/02*** (2006.01)
***D06M 101/32*** (2006.01) ***D06M 101/34*** (2006.01)

(52) Gemeinsame Patentklassifikation (CPC):
**D06M 13/2035; B32B 37/0038; D06M 7/00; D06M 13/02; D06M 13/148; D06M 13/2243; D06M 13/2246; D06M 15/507; D06M 15/564; D06M 15/643; D06N 3/004; D06N 3/14; G21F 1/125;** D06M 2101/32; D06M 2101/34;
(Forts.)

(86) Internationale Anmeldenummer:
**PCT/EP2020/072017**

(87) Internationale Veröffentlichungsnummer:
**WO 2021/032486 (25.02.2021 Gazette 2021/08)**

# (54) BESCHICHTETE MIKROFASERBAHN UND VERFAHREN ZUR HERSTELLUNG DERSELBEN

COATED MICROFIBROUS WEB AND METHOD FOR PRODUCING THE SAME

BANDE DE MICROFIBRES ENDUITE ET PROCÉDÉ DE FABRICATION CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2019 DE 102019005746**

(43) Veröffentlichungstag der Anmeldung:
**14.07.2021 Patentblatt 2021/28**

(73) Patentinhaber: **MAVIG GmbH
81829 München (DE)**

(72) Erfinder:
- **LEUCHT, Thomas
36043 Fulda (DE)**
- **STREIT, Gaby
81829 München (DE)**

(74) Vertreter: **Vossius & Partner
Patentanwälte Rechtsanwälte mbB
Siebertstrasse 3
81675 München (DE)**

(56) Entgegenhaltungen:
**WO-A1-2011/018459 US-A- 4 923 741**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
D06M 2200/35; D06N 2209/048; D06N 2209/105

## Beschreibung

### Technisches Gebiet

Die vorliegende Erfindung betrifft eine beschichtete Mikrofaserbahn, ein Verfahren zur Herstellung derselben, eine in diesem Verfahren einsetzbare Imprägnierungsformulierung, die Verwendung der beschichteten Mikrofaserbahn als Abdeckung eines Strahlenschutzmaterials sowie eine Strahlenschutzvorrichtung.

### Technischer Hintergrund

US-Patent 4,923,741 offenbart eine flexible mehrschichtige Abdeckung, die als Schutz gegen die Gefahren im Weltall dient. Die Abdeckung umfasst unter anderem eine Schicht, die beispielsweise gegen Bremsstrahlung schützen soll.

GB 2 118 410 A beschreibt einen Strahlenschutzgegenstand, der mindestens eine flexible Schicht eines bleihaltigen Materials umfasst, das von einem Gestrick, Gewebe oder Vlies umhüllt ist bzw. zwischen zwei Lagen eines Gestricks, Gewebes oder Vlieses eingefasst ist, wobei das Gestrick, Gewebe oder Vlies eine Beschichtung aus flexiblem Polyurethan auf der äußeren Oberfläche aufweist. Die vorliegenden Erfinder haben jedoch gefunden, dass derartige Strahlenschutzgegenstände, die eine Polyurethanbeschichtung auf der Außenseite aufweisen, einen sehr starkem Abrieb unterliegen, wenn sie beispielsweise in einem medizinischen Bereich verwendet werden.

WO2011018459 betrifft eine beschichtete Mikrofaserbahn und deren Verwendung als Abdeckung eines Strahlenschutzmaterials, wobei die beschichtete Mikrofaserbahn mit einem Fluorpolymer imprägniert ist und eine Schicht umfasst, welche Polyurethan enthält, die nur auf einer Seite der Mikrofaserbahn angebracht ist.

Demgemäß war es eine Aufgabe der vorliegenden Erfindung eine Mikrofaserbahn bereitzustellen, welche eine verbesserte Abriebfestigkeit aufweist und keine halogenierten organischen Substanzen in der Imprägnierung erfordert.

### Zusammenfassung der Erfindung

In einer Ausführungsform betrifft die vorliegende Erfindung, eine beschichtete Mikrofaserbahn, umfassend:

(i) eine Mikrofaserbahn, die einen oder mehrere Polyester und/oder ein oder mehrere Polyamide und/oder ein oder mehrere Polyamid-Polyester-Copolymere umfasst und mit einer Imprägnierungszusammensetzung umfassend eine aromatische Dicarbonsäure, deren Carbonsäuregruppen jeweils mit einem Diol verestert sind, imprägniert ist; und
(ii) eine Schicht, die Polyurethan umfasst, welches nur auf einer Seite der Mikrofaserbahn vorhanden ist.

Dabei kann die "aromatische Dicarbonsäure, deren Carbonsäuregruppen jeweils mit einem Diol verestert sind" ersetzt sein durch ein oder mehrere Oligomere enthaltend mindestens zwei (vorzugsweise nicht mehr als 10) Wiederholungseinheiten bestehend aus einem Monoester einer aromatischen Dicarbonsäure mit einem Diol. Diese Ersetzung kann in jeder der Gegenstände und Ausführungsformen der vorliegenden Erfindung vorgenommen werden, also insbesondere in der Imprägnierungsformulierung, der Imprägnierungszusammensetzung, sowie den Verfahren und Produkten, in denen die Imprägnierungsformulierung und/oder die Imprägnierungszusammensetzung verwendet werden. Es ist jedoch bevorzugt, dass die "aromatische Dicarbonsäure, deren Carbonsäuregruppen jeweils mit einem Diol verestert sind" nicht durch ein Oligomer enthaltend mindestens zwei (vorzugsweise nicht mehr als 10) Wiederholungseinheiten bestehend aus einem Monoester einer aromatischen Dicarbonsäure mit einem Diol ersetzt ist.

Darüber hinaus kann in der Imprägnierungszusammensetzung bzw. der Imprägnierungsformulierung neben der aromatischen Dicarbonsäure, deren Carbonsäuregruppen jeweils mit einem Diol verestert sind, ein oder mehrere Oligomere enthaltend mindestens zwei (vorzugsweise nicht mehr als 10) Wiederholungseinheiten bestehend aus einem Monoester einer aromatischen Dicarbonsäure mit einem Diol enthalten sein. Dies betrifft alle Gegenstände und Ausführungsformen der vorliegenden Erfindung, also insbesondere die Imprägnierungsfonnulierung, die Imprägnierungszusammensetzung, sowie die Verfahren und Produkte, in denen die Imprägnierungsformulierung und/oder die Imprägnierungszusammensetzung verwendet werden. Das Gewichtsverhältnis von "aromatischer Dicarbonsäure, deren Carbonsäuregruppen jeweils mit einem Diol verestert sind" zu "Oligomer(en) enthaltend mindestens zwei (vorzugsweise nicht mehr als 10) Wiederholungseinheiten bestehend aus einem Monoester einer aromatischen Dicarbonsäure mit einem Diol" beträgt vorzugsweise 1000 bis 2, stärker bevorzugt 500 bis 20. Es ist jedoch bevorzugt, dass neben der "aromatischen Dicarbonsäure, deren Carbonsäuregruppen jeweils mit einem Diol verestert sind" ein "Oligomer enthaltend mindestens zwei (vorzugsweise nicht mehr als 10) Wiederholungseinheiten bestehend aus einem Monoester einer aromatischen Dicarbonsäure mit einem Diol" nicht notwendigerweise enthalten ist.

Hierein bezieht sich der Begriff "Oligomer" bevorzugt auf eine Verbindung, die zwei bis zehn identische Wiederholungseinheiten aufweist. Dabei ist es bevorzugt, dass das Oligomer an beiden Enden einen Terminus aus einem

Diol aufweist. Mit anderen Worten ist es bevorzugt, dass das Oligomer an beiden Enden eine Hydroxygruppe aufweist, die von einem Diol stammt. Wenn beispielsweise A die Dicarbonsäure ohne die beiden COOH-Gruppen darstellt und B das Diol ohne die beiden OH-Gruppen darstellt kann das Oligomer insbesondere die folgenden Formeln aufweisen:

HO-B-OC(=O)-A-C(=O)O-B-OC(=O)-A-C(=O)O-B-OH,

HO-B-OC(=O)-A-C(=O)O-B-OC(=O)-A-C(=O)O-B-OC(=O)-A-C(=O)O-B-OH,

HO-B-OC(=O)-A-C(=O)O-B-OC(=O)-A-C(=O)O-B-OC(=O)-A-C(=O)O-B-OC(=O)-A-C(=O)O-B-OH,

HO-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OH,

HO-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OH,

HO-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OH,

HO-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OH,

HO-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OH, und

HO-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OC(=O)-A-C(=O)O-B-OH.

Hierbei ist A bevorzugt eine aromatische Gruppe, wobei die aromatische Gruppe vorzugsweise bis zu 30 Kohlenstoffatome sowie gegebenenfalls bis zu 10 Heteratome, ausgewählt aus N, O und S, enthält, wobei die aromatische Gruppe stärker bevorzugt bis zu 12 Kohlenstoffatome und gegebenenfalls bis zu 4 Heteroatome, ausgewählt aus N, O und S, enthält, wobei die aromatische Gruppen noch stärker bevorzugt Phenylen oder Naphthylen ist, und

B ist bevorzugt $C_{1-6}$-Alkylen, wobei die $C_{1-6}$-Alkylengruppen unabhängig gegebenenfalls mit einem oder mehreren Fluoratomen substituiert sind.

Es ist hierbei bevorzugt, dass alle in einem Molekül des Oligomers enthaltenen Gruppen A gleich sind und dass alle in einem Molekül des Oligomers enthaltenen Gruppen B gleich sind.

In einer weiteren Ausführungsform bezieht sich die Erfindung auf eine Imprägnierungsformulierung umfassend:

(I) Wasser,
(II) eine aromatische Dicarbonsäure, deren Carbonsäuregruppen jeweils mit einem Diol verestert sind,
(III) ein oder mehrere Silikone, bevorzugt umfassend ein oder mehrere Polydimethylsiloxane, und
(IV) ein oder mehrere Wachse, bevorzugt umfassend ein oder mehrere mikrokristalline Paraffine.

Diese Imprägnierungsformulierung kann beispielsweise zur Aufbringung der Imprägnierungszusammensetzung in einem hierin beschriebenen erfindungsgemäßen Verfahren verwendet werden.

In einer weiteren Ausführungsform bezieht sich die Erfindung auf ein Verfahren zur Herstellung einer beschichteten Mikrofaserbahn, welches die folgenden Schritte umfasst:

(a) Bereitstellen einer Mikrofaserbahn;
(b) Imprägnieren der Mikrofaserbahn mit einer Imprägnierungsformulierung, wie hierin definiert;
(c) Trocknen der imprägnierten Mikrofaserbahn;
(d) Aufbringen einer Beschichtungszusammensetzung, die Polyurethan umfasst, auf nur einer Seite der getrockneten, imprägnierten Mikrofaserbahn; und
(e) optional thermisches Behandeln der in Schritt (d) erhaltenen beschichteten Mikrofaserbahn.

Ein weiterer Gegenstand der Erfindung ist die Verwendung der erfindungsgemäßen beschichteten Mikrofaserbahn als Abdeckung eines Strahlenschutzmaterials, wobei die beschichtete Mikrofaserbahn auf mindestens einer Seite

des Strahlenschutzmaterials aufgebracht ist und wobei die mit Polyurethan beschichtete Seite dem Strahlenschutzmaterial benachbart ist.

In einer anderen Ausführungsforn der Erfindung wird eine Strahlenschutzvorrichtung beansprucht, die

(α) ein Strahlenschutzmaterial; und
(β) eine erfindungsgemäße beschichtete Mikrofaserbahn

umfasst, wobei die beschichtete Mikrofaserbahn auf mindestens einer Seite des Strahlenschutzmaterials aufgebracht ist und wobei die mit Polyurethan beschichtete Seite dem Strahlenschutzmaterial benachbart ist.

## Beschreibung der Figuren

Figur 1 zeigt eine schematische Darstellung eines Querschnitts der erfindungsgemäßen beschichteten Mikrofaserbahn.

Figur 2 zeigt eine schematische Darstellung eines Querschnitts der erfindungsgemäßen Strahlenschutzvorrichtung.

## Beschichtete Mikrofaserbahn

Die vorliegende Erfindung betrifft eine beschichtete Mikrofaserbahn, umfassend:

(i) eine Mikrofaserbahn, die einen oder mehrere Polyester und/oder ein oder mehrere Polyamide und/oder ein oder mehrere Polyamid-Polyester-Copolymere umfasst und mit einer Imprägnierungszusammensetzung umfassend eine aromatische Dicarbonsäure, deren Carbonsäuregruppen jeweils mit einem Diol verestert sind, imprägniert ist; und
(ii) eine Schicht, die Polyurethan umfasst, welches nur auf einer Seite der Mikrofaserbahn vorhanden ist.

### (i-a) Die Mikrofaserbahn

Die Mikrofaserbahn ist nicht besonders beschränkt. Sie kann ein beliebiges flächiges Gebilde, wie Gewebe, Gewirk, Gestrick, Membran oder Vlies, sein, das Mikrofasern enthält. Bevorzugt sind Gewebe.

Mikrofasern sind Fasern, die bevorzugt eine Faserstärke von etwa 0,5 dtex bis etwa 1,5 dtex, stärker bevorzugt etwa 0,3 dtex bis etwa 1,0 dtex aufweisen. Die Faserstärke wird vorzugsweise gemäß DIN EN ISO 137:2016 gemessen.

Die Mikrofasern umfassen einen oder mehrere Polyester und/oder ein oder mehrere Polyamide und/oder ein oder mehrere Polyamid-Polyester-Copolymere. Der Gesamtgehalt an dem einen oder den mehreren Polyester(n) und/oder einen oder mehreren Polyamid(en) und/oder einen oder mehreren Polyamid-Polyester-Copolymer(en) in den Mikrofasern beträgt vorzugsweise 50 Gew.-% oder mehr, bezogen auf das Gesamtgewicht der Mikrofasern in der unbeschichteten Mikrofaserbahn. Darüber hinaus können die Mikrofasern beliebige weitere Verbindungen enthalten, wie z.B. Cellulose (z.B. Acetat oder Viskose) und Polytetrafluorethylen sowie Gemisch davon. Mikrofasern, die mindestens 60 Gew.-% oder mehr, bevorzugt 70 Gew.-% oder mehr, stärker bevorzugt 80 Gew.-% oder mehr, noch stärker bevorzugt 90 Gew.-% oder mehr, oder sogar 95 Gew.-% oder mehr Polyester und/oder Polyamid umfassen sind besonders geeignet. Insbesondere sind Mikrofasern, die mindestens 60 Gew.-% oder mehr, bevorzugt 70 Gew.-% oder mehr, stärker bevorzugt 80 Gew.-% oder mehr, noch stärker bevorzugt 90 Gew.-% oder mehr, oder sogar 95 Gew.-% oder mehr Polyester umfassen, besonders geeignet.

Der Begriff "Polyester" bezieht sich vorzugsweise auf Verbindungen, die mehr als 20 Estergruppen (d.h. -C(=O)-O- Gruppen) enthalten. Stärker bevorzugt bezieht sich der Begriff "Polyester" auf Verbindungen, die mehr als 50, bevorzugt mehr als 100, stärker bevorzugt mehr als 500 Estergruppen (d.h. -C(=O)-O- Gruppen) enthalten.

Der Begriff "Polyamid" bezieht sich vorzugsweise auf Verbindungen, die mehr als 20 Amidgruppen (z.B. -C(=O)-NH- Gruppen) enthalten. Stärker bevorzugt bezieht sich der Begriff "Polyamid" auf Verbindungen, die mehr als 50, bevorzugt mehr als 100, stärker bevorzugt mehr als 500 Amidgruppen (z.B. -C(=O)-NH- Gruppen) enthalten.

Der Begriff "Polyamid-Polyester-Copolymer" bezieht sich vorzugsweise auf Verbindungen, die mehr als insgesamt 20 Amidgruppen (z.B. -C(=O)-NH- Gruppen) und Estergruppen (d.h. - C(=O)-O- Gruppen) enthalten. Stärker bevorzugt bezieht sich der Begriff "Polyamid-Polyester-Copolymer" auf Verbindungen, die insgesamt mehr als 50, bevorzugt mehr als 100, stärker bevorzugt mehr als 500 Amidgruppen (z.B. -C(=O)-NH- Gruppen) und Estergruppen (d.h. -C(=O)-O- Gruppen) enthalten.

Die Anzahl von Amidgruppen (z.B. -C(=O)-NH- Gruppen) und Estergruppen (d.h. -C(=O)-O-Gruppen) in einem Molekül lässt sich insbesondere mittels HPLC, beispielsweise RE-HPLC, bestimmen. Ein derartiges Verfahren ist z.B.

in Journal of Chromatography A, Band 1097, Ausgaben 1-2, 2005, Seiten 130-137 von Nasser et al. beschrieben worden.

Polyester können typischerweise aus

(i) einer oder mehreren Hydroxycarbonsäuren, und/oder
(ii) einer oder mehreren Kombinationen von Dialkoholen mit Dicarbonsäuren erhalten werden. Dabei können alternativ die Säuren als Ester verwendet werden.

Anhydride der Dicarbonsäuren wie Phthalsäureanhydrid, Tetrahydrophthalsäureanhydrid oder dergleichen können auch verwendet werden.

Die Hydroxycarbonsäuren, Dialkohole und Dicarbonsäuren des gewünschten Polyesters können beispielsweise aliphatisch, cycloaliphatisch, aromatisch oder eine Kombinationen davon sein.

Polyester von Dialkoholen mit Disäuren schließen insbesondere Polymere von einem oder mehreren Dicarbonsäuren mit insgesamt 4 bis 15 Kohlenstoffatomen, wie Bernsteinsäure, Glutarsäure, Adipinsäure, Pimelinsäure, Korksäure, Azelainsäure, Sebacinsäure, Dodecandionsäure, Isophthalsäure, Terephthalsäure und Cyclohexandicarbonsäure mit einem oder mehreren Dialkoholen, die insgesamt 2 bis 12 Kohlenstoffatome aufweisen, wie Ethylenglycol, Diethylenglycol, Triethylenglycol, 1,2-Propandiol, 1,3-Propandiol, 1,3-Butandiol, 1,4-Butandiol, 1,5-Pentandiol, 2-Methyl-2,4-pentandiol, 1,6-Hexandiol, 2,2-Dimethyl-1,3-propandiol (Neopentylglycol), 1,4-Cyclohexandimethanol, Decamethylenglycol und Dodecamethylenglycol ein.

Als Diole sind üblicherweise 1,4-Butandiol, Neopentylglycol, Ethylenglycol und Mischungen davon bevorzugt.

In der vorliegenden Anmeldung verwendbare Polyamide sind beispielsweise Polyamide mit aliphatischem teilkristallinem oder teilaromatischem sowie amorphem Aufbau jeglicher Art und deren Blends, einschließlich Polyetheramiden wie Polyetherblockamiden. Derartige Polyamide sind beispielsweise in WO 2011/000772 A1 offenbart.

Bevorzugte Polyamide sind Polyhexamethylenadipinsäureamid (PA 66) und Polyhexamethylensebacinsäureamid (PA 610), Polycaprolactam (PA 6) und Polylaurinlactam (PA 12). Ebenfalls bevorzugt sind Copolyamide PA 6/66, insbesondere mit einem Anteil von 5 bis 95 Gew.-% an Caprolactam-Einheiten, und Copolyamide PA 6/12, insbesondere mit 5 bis 95 Gew.-% Laurinlactam-Einheiten. PA 6, PA 66 und Copolyamide 6/66 sind besonders bevorzugt; PA 6 ist ganz besonders bevorzugt. Weitere geeignete Polyamide sind erhältlich aus $\omega$-Aminoalkylnitrilen wie z.B. Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1 198491 und EP-A 922065 beschrieben.

Außerdem in Betracht kommen Polyamide, die z.B. durch Kondensation von 1,4-Diaminobutan mit Adipinsäure unter erhöhter Temperatur erhältlich sind (Polyamid 46). Herstellungsverfahren für Polyamide dieser Struktur sind z.B. in den EP-A 38 094, EP- A 38 582 und EP-A 39 524 beschrieben.

Auch Polyamide, die durch Copolymerisation zweier oder mehrerer der vorgenannten Monomeren erhältlich sind, oder Mischungen mehrerer Polyamide sind geeignet, wobei das Mischungsverhältnis beliebig ist.

Monomereinheiten, die sowohl eine Aminogruppe als auch eine Carbonsäuregruppe enthalten schließen insbesondere $\varepsilon$-Caprolactam, Ethanolactam, Capryllactam, 9-Aminopelargonsäure, 11 -Aminoundecansäure und Laurinlactam ein.

Polyamide von Diaminen mit Disäuren schließen insbesondere Polymere von einem oder mehreren von 1,12-Dodecandiamin, 1,13-Diaminotridecan, Diaminodicyclohexylmethan, Dimethyl-diaminodicyclohexylmethan, Hexamethylendiamin, m-Xylylendiamin, Phenylendiamin, Tetramethylendiamin und Trimethylhexamethylendiamin mit einem oder mehreren von Adipinsäure, Azelainsäure, Decandicarbonsäure, Isophthalsäure, Sebacinsäure, Terephthalsäure und Undecandicarbonsäure ein.

Beispiele von bevorzugten Polyamiden schließen PA 46, PA 66, PA 69, PA 610, PA 612, PA 613, PA 1212, PA 1313, PA 6T, PA MXD6, PA 61, PA 6-3-T, PA 6/6T, PA 6/66, PA 6/12, PA 66/6/610, PA 6I/6T, PA PACM, PA 6I/6T/PACM, PA 12/MACMI, PA 12/MACMT und PA PDA-T ein.

Diese Polyamide und ihre Herstellung sind bekannt, beispielsweise aus Ullmanns Encyklopädie der Technischen Chemie, 4. Auflage, Bd. 19, S. 39-54, Verlag Chemie, Weinheim 1980; Ullmanns Encyclopedia of Industrial Chemistry, Vol. A21, S. 179-206, VCH Verlag, Weinheim 1992; Stoeckhert, Kunststofflexikon, 8. Auflage, S. 425-428, Carl Hanser Verlag München 1992 (Stichwort "Polyamide" und folgende), sowie Saechtling, Kunststoff-Taschenbuch, 27. Ausgabe, Carl Hanser-Verlag München1998, Seiten 465-478. Bevorzugt werden die Polyamide auf übliche Weise durch hydrolytische oder aktivierte, anionische Polymerisation der Monomeren in diskontinuierlich oder kontinuierlich arbeitenden Apparaturen, z.B. Autoklaven oder VK-Rohren, hergestellt. Der Restgehalt an Monomeren und/oder Oligomeren kann gegebenenfalls durch Vakuumdestillation der Polyamidschmelze oder durch Extraktion des aus der Polyamidschmelze gewonnenen Granulats, z.B. mit heißem Wasser, entfernt werden.

Die Mikrofaserbahn kann elektrisch leitende Fasern enthalten, um elektrostatische Aufladungen zu vermindern. Die elektrisch leitenden Fasern sind nicht besonders beschränkt. Beispiele hierfür sind Fasern aus Kohlenstoff, Metall oder Fasern auf Polymerbasis, beispielsweise Polymerfasern, die Kohlenstoff- oder Metallteilchen enthalten. In einer bevorzugten Ausführungsform werden Polymerfasern, die Kohlenstoffteilchen enthalten, verwendet. Die elektrisch leitenden Fasern haben beispielsweise eine Faserstärke im Bereich von etwa 1 dtex bis etwa 3 dtex, bevorzugt etwa 1,2 dtex bis etwa 2 dtex. Wenn der Durchmesser der elektrisch leitenden Fasern größer (bevorzugt etwa 1,2- bis etwa 3-fach größer, stärker bevorzugt etwa 1,2- bis etwa 2-fach größer) als der Durchmesser der Mikrofasern ist, ragen die elektrisch leitenden Fasern aus der Gewebeoberfläche hervor. Der Fachmann kann die Menge der elektrisch leitenden Fasern auf Grund seines Fachwissens geeignet wählen. Es werden üblicherweise etwa 0,1 Gew.-% bis etwa 10 Gew.-%, bevorzugt etwa 0,5 Gew.-% bis etwa 3 Gew.-% elektrisch leitende Fasern in der Mikrofaserbahn enthalten sein, wobei sich die Gewichtsprozent auf das Gesamtgewicht der Fasern in der unbeschichteten Mikrofaserbahn beziehen. In einer bevorzugten Ausführungsform soll die fertige Mikrofaserbahn einen elektrostatischen Oberflächenwiderstand von etwa $10^5$ Ohm bis etwa $10^8$ Ohm (gemessen nach DIN 100015-1 bei 25 % rel. Luftfeuchtigkeit und 23 °C) aufweisen.

Mikrofasern und die gegebenenfalls vorhandenen elektrisch leitenden Fasern werden gemäß bekannten Verfahren zu einer Mikrofaserbahn verarbeitet. Die elektrisch leitenden Fasern können statistisch oder in einer regelmäßigen Anordnung in die Mikrofaserbahn eingearbeitet sein. Die Art der Einarbeitung wird von den Anforderungen an die Ableitung von elektrischen Aufladungen sowie von dem Verfahren, mit dem die Mikrofaserbahn hergestellt wird, abhängen. In einer bevorzugten Ausführungsform werden die elektrisch leitenden Fasern in einer regelmäßigen Anordnung eingearbeitet. Sie können beispielsweise in einer gitterförmigen Anordnung eingearbeitet sein, da diese Anordnung mögliche elektrostatische Aufladungen besonders günstig ableitet. Die Abstände zwischen den Gitterlinien liegen bevorzugt im Bereich von etwa 3 mm bis etwa 100 mm, bevorzugt etwa 5 mm bis etwa 75 mm, wobei die Seitenlängen der Gitterrechtecke voneinander verschieden sein können.

Die Luftdurchlässigkeit der Mikrofaserbahn, die als Ausgangsmaterial verwendet wird, wird vom Fachmann je nach Verwendungszweck geeignet gewählt. In einer Ausführungsform beträgt die Luftdurchlässigkeit 0 bis etwa 100 l/min pro $dm^2$, bevorzugt 5 bis etwa 50 l/min pro $dm^2$, wobei die Luftdurchlässigkeit nach DIN EN ISO 9237 gemessen wird.

Das Flächengewicht der Mikrofaserbahn, die als Ausgangsmaterial verwendet wird, wird ebenfalls im Hinblick auf den Verwendungszweck geeignet gewählt. Das Flächengewicht wird üblicherweise im Bereich von etwa 50 $g/m^2$ bis etwa 200 $g/m^2$, bevorzugt etwa 60 $g/m^2$ bis etwa 150 $g/m^2$, liegen.

Die Dicke der Mikrofaserbahn, die als Ausgangsmaterial verwendet wird, ist nicht besonders beschränkt. Sie wird üblicherweise im Hinblick auf den Verwendungszweck gewählt werden. In einer Ausführungsform wird die Mikrofaserbahn eine Dicke im Bereich von etwa 0,05 mm bis etwa 0,20 mm, bevorzugt etwa 0,10 mm bis etwa 0,15 mm, aufweisen.

**(i-b) Die Imprägnierungszusammensetzung bzw. Imprägnierungsformulierung**

Die Imprägnierungszusammensetzung wird hierin üblicherweise so verstanden, dass es sich um die unter den Trocknungsbedingungen nicht-flüchtigen Komponenten der Imprägnierungsformulierung handelt. Mit anderen Worten wird der Begriff "Imprägnierungsformulierung" für die Zusammensetzung verwendet, in der die Imprägnierung aufgebracht wird, während der Begriff "Imprägnierungszusammensetzung" für die Zusammensetzung steht, in der die Imprägnierung nach dem Trocknen vorliegt. Folglich treffen die hierin ausgeführten Angabe zu Inhaltstoffen der Imprägnierungszusammensetzung auch auf die Inhaltsstoffe der Imprägnierungsformulierung zu, und umgekehrt (abgesehen von Wasser oder anderen Lösungsmitteln, die in der Imprägnierungsformulierung enthalten sein können).

Je nach Art der Aufbringung, z.B. wenn die Imprägnierungszusammensetzung ohne Zusatz von Wasser oder anderen Lösungsmitteln aufgebracht wird, können die Begriffe Imprägnierungsformulierung und Imprägnierungszusammensetzung jedoch auch synonym verwendet werden.

<u>Aromatische Dicarbonsäure, deren Carbonsäuregruppen jeweils mit einem Diol verestert sind</u>

Die in der vorliegenden Erfindung verwendete Imprägnierungszusammensetzung umfasst mindestens eine aromatische Dicarbonsäure, deren Carbonsäuregruppen jeweils mit einem Diol verestert sind. Die Erfinder haben erstaunlicherweise festgestellt, dass eine solche Verbindung besonders geeignet ist, weitere Komponenten der Imprägnierungszusammensetzung, wie Wachse und Silikone in den Beschichtungsfilm zu transportieren. Dadurch, dass diese Verbindung in der Zwischenschicht interagiert, kann eine ausreichende Haftung/Adhesion zwischen der Mikrofaserbahn und der Schicht, die Polyurethan umfasst, stattfinden. Andernfalls kann die Schicht, die Polyurethan umfasst, wieder relativ leicht abgelöst werden.

Es wird vermutet, dass die aromatische Dicarbonsäure, deren Carbonsäuregruppen jeweils mit einem Diol verestert sind als Trennfilm während des Rakelvorgangs wirkt und während der Trocknung sowohl in die Mikrofaserbahn aber auch in die Schicht, die Polyurethan umfasst, nahezu vollständig diffundiert. Hierbei dient die aromatische Dicarbonsäure, deren Carbonsäuregruppen jeweils mit einem Diol verestert sind, u.a. als Transportsubstanz des Wachses und des Silikons.

Die aromatische Dicarbonsäure, deren Carbonsäuregruppen jeweils mit einem Diol verestert sind kann alternativ auch als Dicarbonsäure-bis(diol)-ester bezeichnet werden. Allgemein wird dadurch eine Verbindung bezeichnet,

die durch Kondensation (Abspaltung von Wasser) von einem Molekül aromatischer Dicarbonsäure mit zwei Molekülen Diol erhalten wird.

Allgemein sind aromatische Dicarbonsäuren aus einer aromatischen Gruppe sowie zwei daran befindlichen -COOH Resten aufgebaut. Daneben kann die aromatische Gruppe noch einen oder mehrere weitere Substituenten wie -OH, -$C_{1-6}$-Alkyl, -F, -Cl, -Br, -CN, $NO_2$, etc. aufweisen. Die aromatische Gruppe kann eine carbozyklische oder heterocylische Gruppe sein und beispielsweise 1, 2 oder 3 Ringe enthalten, die üblicherweise kondensiert sind, Beispiele von aromatischen Gruppen umfassen Benzol, Naphthalin, Thiophen, Furan, Pyrrol, Imidazol, Pyrazol, Thiazol, Isothiazol, Oxazol, Isoxazol, Pyridin, Pyrazin, Pyrimidin, Pyridazin, 1,2,4-Oxadiazol, 1,3,4-Oxadiazol, 1,2,4-Thiadiazol, 1,3,4-Thiadiazol, Furazan, Benzofuran, Benzimidazol, Benzoxazol, Benzothiazol, Benzisothiazol, Naphtho[2,3-b]thiophen, Isochinolin, Chinolin, Indol, Chinoxalin, Phenanthridin, Phenothiadin, Phenoxazin, Phthalazin, Naphthyridin, Chinazolin, Cinnolin, Carbazol Phenazin, Phthalimid und Thioxanthen.

Bevorzugte Beispiele von aromatischen Dicarbonsäuren umfassen Phthalsäure, Isophthalsäure, Terephthalsäure, 2,6-Naphthalindicarbonsäure, und 1,4-Naphthalindicarbonsäure.

Die Diole sind bevorzugt aliphatische Diole. Diese sind bevorzugt ausgewählt aus geradkettigen, verzweigten oder zyklischen Alkandiolen mit 2 bis 15 Kohlenstoffatomen. Stärker bevorzugt sind geradkettige Alkandiole mit 2 bis 10 Kohlenstoffatomen, bevorzugt 2 bis 5 Kohlenstoffatomen, stärker bevorzugt 2 oder 3 Kohlenstoffatomen. In den geradkettigen Alkandiole sind die beiden Hydroxygruppen bevorzugt endständig (z.B. $\alpha$-$\omega$-Dihydroxyalkane).

Die aromatische Dicarbonsäure, deren Carbonsäuregruppen jeweils mit einem Diol verestert sind, ist bevorzugt eine Verbindung der Formel (I):

$$\text{HO-(}C_{1\text{-}6}\text{-Alkylen)-O-C(O)-(aromatische Gruppe)-C(O)-O-(}C_{1\text{-}6}\text{-Alkylen)-OH} \quad \text{(I)}$$

wobei die $C_{1-6}$-Alkylengruppen geradkettig oder verzweigt sein können und unabhängig gegebenenfalls mit einem oder mehreren Fluoratomen substituiert sind, und
die aromatische Gruppe vorzugsweise bis zu 30 Kohlenstoffatome sowie gegebenenfalls bis zu 10 Heteratome, ausgewählt aus N, O und S, enthält.

Die aromatische Gruppe enthält bevorzugt einen, zwei oder drei kondensierte Ringe. Die aromatische Gruppe enthält bevorzugt bis zu 12 Kohlenstoffatome und gegebenenfalls bis zu 4 Heteroatome, ausgewählt aus N, O und S. Bevorzugt ist die aromatische Gruppe Phenylen oder Naphthylen.

Die Verbindung der Formel (I) ist bevorzugt eine Verbindung der folgenden Formel (II):

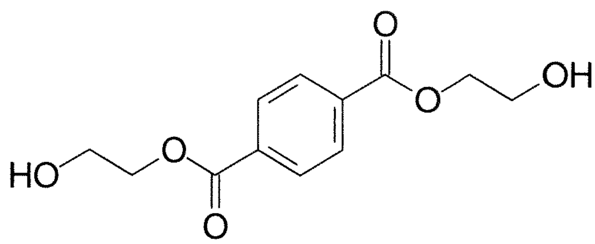

(II)

In einer weiteren Ausführungsform ist die Verbindung der Formel (I) bevorzugt eine Verbindung der folgenden Formel (III):

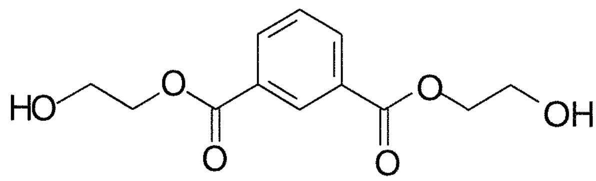

(III)

Neben der aromatischen Dicarbonsäure, deren Carbonsäuregruppen jeweils mit einem Diol verestert sind, umfasst die Imprägnierungszusammensetzung vorzugsweise weiterhin eines oder mehrere, ausgewählt aus:

a) einem oder mehreren Silikon(en), und

b) einem oder mehreren Wachs(en).

Dabei umfasst die Imprägnierungszusammensetzung vorzugsweise sowohl ein oder mehrere Polydimethylsiloxane als auch ein oder mehrere Wachse.

Silikone

Als Silikone werden jegliche Polymere (insbesondere Verbindungen mit einem $M_w$ von 200 oder mehr) verstanden die mindestens eine C-H Bindung sowie eine Si-O-Si Gruppe enthalten.

Bevorzugte Silikone sind durch die folgende Formel dargestellt:

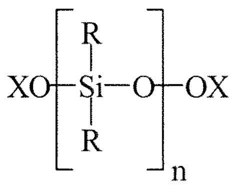

wobei n von 5 bis 100000 (bevorzugt 30 bis 10000, stärker bevorzugt 50 bis 1000, noch stärker bevorzugt 90 bis 500) reicht,

jedes R gleich oder verschieden (bevorzugt gleich) ausgewählt ist aus $C_{1-20}$ Alkyl- oder $C_{1-20}$ Aryl-Gruppen (bevorzugt $C_{1-5}$ Alkylgruppen, stärker bevorzugt Methylgruppen),
X gleich oder verschieden Wasserstoff oder ein Rest ausgewählt aus Polyether-, Polyester-, Alkyl-, Alkyl-Aryl-, Aryl-, Epoxy-, Acryl-, oder Vinyl-Resten ist, wobei X bevorzugt jeweils Wasserstoff ist.

Die ein oder mehreren Silikone umfassen bevorzugt ein oder mehrere Polydimethylsiloxane. Polydimethylsiloxane sind als sog. Dimethicone kommerziell erhältlich.

Zum Einsatz in der vorliegenden Erfindung eignen sich besonders PDMS-Emulsionen mit endständigen OH-Gruppen und Einsatzkonzentrationen von 2% bis 40% PDMS-Anteil, wie z.B. Korasilon® Öle R von Kurt Obermaier GmbH & Co. KG.

Wachse

Die einen oder mehreren Wachse sind nicht besonders beschränkt und können von jeglicher bekannter Art sein. Die einen oder mehreren Wachse weisen bevorzugt eine Schmelztemperatur auf, die 20 bis 30°C unter der maximalen Trocknungstemperatur im nachfolgenden Trocknungsschritt liegt. Die Bestimmung von Schmelzpunkten in der vorliegenden Erfindung erfolgt gemäß DIN EN ISO 1357-2.

Die einen oder mehreren Wachse weisen bevorzugt einen Erstarrungspunkt gem. ASTM D938 von + 40°C bis + 160°C, vorzugsweise von + 45°C bis + 80°C, auf. Bevorzugt umfassen die einen oder mehreren Wachse Bienenwachs oder: bestehen aus Bienenwachs.

Die Wachse können beispielsweise Fettsäuretriglyceride oder Paraffine umfassen, bzw. aus diesen bestehen.

Fettsäuretriglyceride als Wachse enthalten bevorzugt Fettsäuren mit 22 oder mehr Kohlenstoffatomen, wie zum Beispiel Trigylceride von Docosansäure, Tricosansäure, Tetracosansäure, Pentacosansäure Hexacosansäure, Heptacosansäure oder Gemischen davon. Beispiele solcher Wachse sind Bienenwachs, Carnaubawachs, Candelillawachs und

Montanwachs.

Bienenwachsemulsionen, die in der vorliegenden Erfindung als Wachskomponente verwendet werden können sind u.a. als Aquacer 561 von BYKChemie GmbH erhältlich. Diese weisen vorzugsweise Einsatzkonzentrationen 5 bis 70 Gew.-%, stärker bevorzugt 15 bis 40 Gew.-% auf (Gewicht des Wachses pro Gewicht der Emulsion).

Bevorzugt umfassen die Wachse ein oder mehrere Paraffine, bevorzugt zu 50 Gew.-% oder mehr bezogen auf die Gesamtheit der Wachse (stärker bevorzugt zu 80 Gew.-% oder mehr, oder sogar zu 95% oder mehr). Paraffine sind gesättigte Kohlenwasserstoffe, die kettenförmig oder verzweigt sein können und üblicherweise 15 bis 80 Kohlenstoffatome (bevorzugt 35 bis 80, stärker bevorzugt 40 bis 70) pro Molekül enthalten. Diese sind bei 25°C üblicherweise fest.

Die einen oder mehreren Paraffine umfassen bevorzugt ein oder mehrere mikrokristalline Paraffine. Es ist

bevorzugt, dass die einen oder mehreren Wachse mikrokristallines Paraffin sind.

Als mikrokristalline Paraffine werden üblicherweise Paraffine bezeichnet, die 35 bis 80 Kohlenstoffatome (bevorzugt 40 bis 70 Kohlenstoffatome) pro Molekül enthalten und vorzugsweise einen Schmelzpunkt von 70 bis 80°C aufweisen. Mikrokristalline Paraffine enthalten gewöhnlich einen hohen Anteil von Iso-Alkanen. Mikrokristallines Paraffin wird im Lebensmittelbereich auch als E 905 bezeichnet.

Die Imprägnierungszusammensetzung wird üblicherweise in Form einer Lösung oder Dispersion ihrer Bestandteile in einem geeigneten Lösungsmittel aufgetragen. Im Falle der Auftragung als Lösung enthält das Lösungsmittel üblicherweise ein organisches Lösungsmittel wie etwa Benzin, Toluol, Xylol, Hexan und halogenierte Kohlenwasserstoffe.

Es ist jedoch bevorzugt, dass die Imprägnierungszusammensetzung in Form einer wässrigen Dispersion eingesetzt wird. Eine solche Dispersion kann hierin auch als Imprägnierungsformulierung bezeichnet werden. Eine übliche Imprägnierungsformulierung enthält dabei üblicherweise von etwa 20 bis 98 Gew.-% Wasser, wobei sich der Rest aus den Komponenten der Imprägnierungszusammensetzung zusammensetzt. Das dabei verwendete Wasser ist bevorzugt deionisiertes Wasser, das zu mindestens 99.9 Gew.-% aus $H_2O$ und $D_2O$ besteht.

Eine bevorzugte Imprägnierungsformulierung, die hierin auch als solche beansprucht wird, umfasst:

(I) Wasser,
(II) eine aromatische Dicarbonsäure, deren Carbonsäuregruppen jeweils mit einem Diol verestert sind,
(III) ein oder mehrere Silikone, und
(IV) ein oder mehrere Wachse.

Weiter bevorzugt umfasst die Imprägnierungsformulierung:

(I) 20 - 98 Gew.-% Wasser,
(II) 0,5 - 30 Gew.-% einer aromatischen Dicarbonsäure, deren Carbonsäuregruppen jeweils mit einem Diol verestert sind,
(III) 1 - 30 Gew.-% ein oder mehrere Silikone, und
(IV) 5 - 80 Gew.-% ein oder mehrere Wachse.

Stärker bevorzugt umfasst die Imprägnierungsformulierung:

(I) 50 - 97 Gew.-% Wasser,
(II) 2 - 15 Gew.-% einer aromatischen Dicarbonsäure, deren Carbonsäuregruppen jeweils mit einem Diol verestert sind,
(III) 4 - 10 Gew.-% ein oder mehrere Silikone, und
(IV) 5 - 12 Gew.-% ein oder mehrere Wachse.

Noch stärker bevorzugt umfasst die Imprägnierungsfonnulierung:

(I) 60 - 95 Gew.-% Wasser,
(II) 3 - 5 Gew.-% einer aromatischen Dicarbonsäure, deren Carbonsäuregruppen jeweils mit einem Diol verestert sind,
(III) 5 - 8 Gew.-% ein oder mehrere Silikone, und
(IV) 6 - 10 Gew.-% ein oder mehrere Wachse.

Es versteht sich, dass ein oder mehrere der Komponenten der Imprägnierungsformulierung auch in Form einer Lösung, Emulsion, Suspension oder Dispersion in einem geeigneten Lösungsmittel eingesetzt werden können. Das in solchen Lösungen, Emulsionen, Suspensionen oder Dispersionen eingesetzte Wasser ist bei der Berechnung des gesamten Wassergehalts mit dem ansonsten eingesetzten Wasser zu addieren, um den angegebenen Wassergehalt der Imprägnierungsformulierung zu erhalten. Wenn daher z.B. 20 - 95 Gew.-% Wassergehalt für die Imprägnierungsformulierung angegebenen ist, umfasst dies sämtliches Wasser, auch Wasser, welches gegebenenfalls durch Lösungen, Emulsionen, Suspensionen oder Dispersionen von aromatischer Dicarbonsäure, Silikonen, Wachsen etc. in die Imprägnierungsformulierung eingebracht wird.

Folglich umfasst die Imprägnierungsformulierung bevorzugt 20 - 98 Gew.-% Wasser, stärker bevorzugt 50 - 97 Gew.-% Wasser, noch stärker bevorzugt 60 - 95 Gew.-% Wasser, sogar noch stärker bevorzugt 70 - 85 Gew.-% Wasser, bezogen auf das Gesamtgewicht der Imprägnierungsformulierung.

Weiter umfasst die Imprägnierungsformulierung bevorzugt 0,5 - 30 Gew.-% einer aromatischen Dicarbonsäure, deren Carbonsäuregruppen jeweils mit einem Diol verestert sind, stärker bevorzugt 2 - 15 Gew.-% einer aromatischen Dicarbonsäure, deren Carbonsäuregruppen jeweils mit einem Diol verestert sind, noch stärker bevorzugt 2 - 7 Gew.-%

einer aromatischen Dicarbonsäure, deren Carbonsäuregruppen jeweils mit einem Diol verestert sind, sogar noch stärker bevorzugt 3 - 5 Gew.-% einer aromatischen Dicarbonsäure, deren Carbonsäuregruppen jeweils mit einem Diol verestert sind, bezogen auf das Gesamtgewicht der Imprägnierungsformulierung.

Weiter umfasst die Imprägnierungsformulierung bevorzugt 1 - 30 Gew.-% ein oder mehrere Silikone, stärker bevorzugt 4 - 10 Gew.-% ein oder mehrere Silikone, noch stärker bevorzugt 5 - 8 Gew.-% ein oder mehrere Silikone, sogar noch stärker bevorzugt 6 - 7 Gew.-% ein oder mehrere Silikone, bezogen auf das Gesamtgewicht der Imprägnierungsformulierung.

Weiter umfasst die Imprägnierungsformulierung bevorzugt 5 - 80 Gew.-% ein oder mehrere Wachse, stärker bevorzugt 5 - 20 Gew.-% ein oder mehrere Wachse, noch stärker bevorzugt 6 - 10 Gew.-% ein oder mehrere Wachse, sogar noch stärker bevorzugt 7 - 9 Gew.-% ein oder mehrere Wachse, bezogen auf das Gesamtgewicht der Imprägnierungsformulierung.

Weiter umfasst die Imprägnierungsformulierung bevorzugt 1 - 10 Gew.-% ein oder mehrere Emulgatoren, stärker bevorzugt 2 -7 Gew.-% ein oder mehrere Emulgatoren, noch stärker bevorzugt 3 - 6 Gew.-% ein oder mehrere Emulgatoren, sogar noch stärker bevorzugt 4 - 5 Gew.-% ein oder mehrere Emulgatoren, bezogen auf das Gesamtgewicht der Imprägnierungsformulierung.

Es versteht sich, dass die Imprägnierungszusammensetzung bzw. Imprägnierungsformulierung des Weiteren, falls erforderlich, Hilfsstoffe, wie weitere Silikone, Silane, weitere Wachse, Vernetzer (beispielsweise Isocyanatvernetzer, z.B. SCL (Kapp-Chemie), Acetox-, Alkoxy-, Ketoxym-Silane (CAS Nr.: 1185-55-3)), Salze (beispielsweise Zirkoniumsalze), Emulgatoren, Dispergatoren, Konservierungsmittel, Entlüfter, Entschäumer, Rheologieadditive,, Gleitadditive, Weichgriffmittel und/oder Mattierungsmittel etc. enthalten kann.

Es versteht sich, dass die Imprägnierungszusammensetzung angesichts der Komponenten der oben ausgeführten Imprägnierungsformulierung bevorzugt umfasst:

(I) 5 Gew.-% oder weniger Wasser,
(II) 9 - 35 Gew.-% einer aromatischen Dicarbonsäure, deren Carbonsäuregruppen jeweils mit einem Diol verestert sind,
(III) 14 - 57 Gew.-% ein oder mehrere Silikone, und
(IV) 15 - 70 Gew.-% ein oder mehrere Wachse.

Stärker bevorzugt:

(I) 3 Gew.-% oder weniger Wasser,
(II) 12 - 26 Gew.-% einer aromatischen Dicarbonsäure, deren Carbonsäuregruppen jeweils mit einem Diol verestert sind,
(III) 19 - 43 Gew.-% ein oder mehrere Silikone, und
(IV) 23 - 51 Gew.-% ein oder mehrere Wachse.

Noch stärker bevorzugt:

(I) 2 Gew.-% oder weniger Wasser,
(II) 14 - 22 Gew.-% einer aromatischen Dicarbonsäure, deren Carbonsäuregruppen jeweils mit einem Diol verestert sind,
(III) 23 - 36 Gew.-% ein oder mehrere Silikone, und
(IV) 27 - 43 Gew.-% ein oder mehrere Wachse.

Folglich umfasst die Imprägnierungszusammensetzung bevorzugt 5 Gew.-% oder weniger Wasser, stärker bevorzugt 3 Gew.-% oder weniger Wasser, noch stärker bevorzugt 2 Gew.-% oder weniger Wasser, sogar noch stärker bevorzugt 1 Gew.-% oder weniger Wasser, bezogen auf das Gesamtgewicht der Imprägnierungszusammensetzung.

Weiter umfasst die Imprägnierungszusammensetzung bevorzugt 9 - 35 Gew.-% einer aromatischen Dicarbonsäure, deren Carbonsäuregruppen jeweils mit einem Diol verestert sind, stärker bevorzugt 12 - 26 Gew.-% einer aromatischen Dicarbonsäure, deren Carbonsäuregruppen jeweils mit einem Diol verestert sind, noch stärker bevorzugt 14 - 22 Gew.-% einer aromatischen Dicarbonsäure, deren Carbonsäuregruppen jeweils mit einem Diol verestert sind, sogar noch stärker bevorzugt 16 - 19 Gew.-% einer aromatischen Dicarbonsäure, deren Carbonsäuregruppen jeweils mit einem Diol verestert sind, bezogen auf das Gesamtgewicht der Imprägnierungszusammensetzung.

Weiter umfasst die Imprägnierungszusammensetzung bevorzugt 14 - 57 Gew.-% ein oder mehrere Silikone, stärker bevorzugt 19 - 43 Gew.-% ein oder mehrere Silikone, noch stärker bevorzugt 23 - 36 Gew.-% ein oder mehrere Silikone, sogar noch stärker bevorzugt 26 - 31 Gew.-% ein oder mehrere Silikone, bezogen auf das Gesamtgewicht der Imprägnierungszusammensetzung.

Weiter umfasst die Imprägnierungszusammensetzung bevorzugt 15 - 70 Gew.-% ein oder mehrere Wachse, stärker bevorzugt 23 - 51 Gew.-% ein oder mehrere Wachse, noch stärker bevorzugt 27 - 43 Gew.-% ein oder mehrere Wachse, sogar noch stärker bevorzugt 31 - 38 Gew.-% ein oder mehrere Wachse, bezogen auf das Gesamtgewicht der Imprägnierungszusammensetzung.

Weiter umfasst die Imprägnierungszusammensetzung bevorzugt 10 - 39 Gew.-% ein oder mehrere Emulgatoren, stärker bevorzugt 13 - 30 Gew.-% ein oder mehrere Emulgatoren, noch stärker bevorzugt 16 - 25 Gew.-% ein oder mehrere Emulgatoren, sogar noch stärker bevorzugt 18 - 22 Gew.-% ein oder mehrere Emulgatoren, bezogen auf das Gesamtgewicht der Imprägnierungszusammensetzung.

**(ii) Die Schicht, die Polyurethan umfasst**

Auf einer Seite der Mikrofaserbahn ist eine Schicht, die Polyurethan umfasst, aufgebracht. Durch die Schicht, die Polyurethan umfasst, ist die beschichtete Mikrofaserbahn leicht zu Reinigen. Des Weiteren gewährleistet diese Schicht Dichtheit gegen Wasser und Penetration durch Mikroorganismen, wie Bakterien. Die Schicht, die Polyurethan umfasst, ist bevorzugt in Form einer kontinuierlichen Schicht auf einer Oberfläche der Mikrofaserbahn aufgebracht. Die Schicht sollte eine einheitliche Dicke aufweisen. Die Dicke der Schicht liegt bevorzugt im Bereich von etwa 3 $g/m^2$ bis etwa 50 $g/m^2$, stärker bevorzugt im Bereich von etwa 8 $g/m^2$ bis etwa 20 $g/m^2$.

Als Polyurethane kommen alle Polyurethanhomo- und -copolymere in Frage. Unter anderem kommen Polyurethanblockcopolymere wie Polyester-Polyurethane und Polyetherpolyol-Polyurethane in Frage. Die Polyester und Poletherpolyole haben üblicherweise ein Molekulargewicht (Mw wie durch Static Light Scattering bestimmt, insbesondere Right angle light scattering (RALS)) von etwa 4000 bis etwa 6000. Ein Beispiel eines kommerziell erhältlichen Produktes ist Impranil®.

Die Schicht, die Polyurethan umfasst, kann neben Polyurethan auch weitere Bestandteile enthalten. Ein möglicher Bestandteil ist ein Fluorharz.

Das Fluorharz kann ein teil- oder perfluoriertes Polymer sein. Es sind sowohl Homo- als auch Copolymere geeignet. Fluoralkylacrylathomopolymere und Fluoralkylacrylatcopolymere sind besonders geeignet.

Bevorzugte Fluorharze weisen perfluoralkylhaltige Seitengruppen auf. Diese Seitengruppen können beispielsweise durch Polymerisieren von perfluoralkylhaltigen Monomeren, die den folgenden Aufbau aufweisen, in das Fluorharz eingebracht werden:

Perfluoralkyleinheit - optionaler Spacer - polymerisierbare Gruppe

Die Perfluoralkyleinheit weist bevorzugt etwa 4 bis etwa 12 Kohlenstoffatomen auf. Der optionale Spacer ist nicht besonders beschränkt, mit der Maßgabe, dass er keine Perfluoralkyleinheit ist. Er weist bevorzugt etwa 2 bis etwa 10 Atome, stärker bevorzugt etwa 2 bis etwa 8 Atome, in der Kette auf. In dem Spacer können sowohl Kohlenstoffatome wie auch Heteroatome wie N, O und S vorhanden sein. Die polymerisierbare Gruppe ist nicht besonders beschränkt und kann jede polymerisierbare Gruppe sein, die zur Bildung eines Polymers geeignet ist. Beispiele für polymerisierbare Gruppen umfassen ethylenisch ungesättigte Gruppen.

Beispiele für perfluoralkylhaltige Monomere sind perfluoralkylhaltige Acrylate der Formel

$$H_2C{=}CR{-}C(O){-}O{-}(CH_2)_n{-}C_mF_{2m+1}$$

wobei

R H oder $CH_3$ bedeutet;
n 0 bis etwa 8, bevorzugt 0 bis etwa 6, beträgt; und
m etwa 4 bis etwa 12 beträgt.

Die Fluorharze können weitere Seitengruppen aufweisen, wobei insbesondere alkylhaltige Seitengruppen und/oder funktionelle Seitengruppen geeignet sind. In einer Ausführungsform kann das Fluorharz alkylhaltige Seitengruppen aufweisen.

Diese Seitengruppen können beispielsweise durch Polymerisieren von alkylhaltigen Monomeren, die den folgenden Aufbau aufweisen, in das Fluorharz eingebracht werden:

Alkyleinheit - optionaler Spacer - polymerisierbare Gruppe

Die Alkyleinheit weist bevorzugt etwa 1 bis etwa 12 Kohlenstoffatomen auf. Der optionale Spacer ist nicht besonders beschränkt, mit der Maßgabe, dass er keine Alkyleinheit ist. Er weist bevorzugt etwa 0 bis etwa 20 Atome, stärker bevorzugt etwa 0 bis etwa 10 Atome, in der Kette auf. In dem Spacer können sowohl Kohlenstoffatome wie auch Heteroatome wie N, O und S vorhanden sein. Die polymerisierbare Gruppe ist nicht besonders beschränkt und kann jede polymerisierbare Gruppe sein, die zur Bildung eines Polymers geeignet ist. Beispiele für polymerisierbare Gruppen umfassen ethylenisch ungesättigte Gruppen.

Beispiele für alkylhaltige Monomere sind alkylhaltige Acrylate der Formel

$$H_2C{=}CR\text{-}C(O)\text{-}O\text{-}C_pH_{2p+1}$$

wobei

R H oder $CH_3$ bedeutet; und
p etwa 1 bis etwa 12 beträgt.

In einer Ausführungsform kann das Fluorharz funktionelle Seitengruppen aufweisen.

Diese Seitengruppen können beispielsweise durch Polymerisieren von funktionellen Monomeren, die den folgenden Aufbau aufweisen, in das Fluorharz eingebracht werden:

funktionelle Einheit - optionaler Spacer - polymerisierbare Gruppe

Die funktionelle Einheit ist nicht besonders beschränkt und kann jede funktionelle Gruppe enthalten. Beispiele für funktionelle Gruppen sind OH, SH, $NH_2$, N-Methylolsulfonamide usw. Die funktionelle Einheit weist bevorzugt 0 bis etwa 20 Kohlenstoffatomen, bevorzugt 0 bis etwa 12 Kohlenstoffatomen, auf. Der optionale Spacer ist nicht besonders beschränkt, mit der Maßgabe, dass er keine Alkyleinheit ist. Er weist bevorzugt etwa 0 bis etwa 20 Atome, stärker bevorzugt 0 bis etwa 10 Atome, in der Kette auf. In dem Spacer können sowohl Kohlenstoffatome wie auch Heteroatome wie N, O und S vorhanden sein. Die polymerisierbare Gruppe ist nicht besonders beschränkt und kann jede polymerisierbare Gruppe sein, die zur Bildung eines Polymers geeignet ist. Beispiele für polymerisierbare Gruppen umfassen ethylenisch ungesättigte Gruppen.

Beispiele für funktionelle Monomere sind Acrylate der Formel

$$H_2C{=}CR\text{-}C(O)\text{-}O\text{-}C_pH_{2p}X$$

wobei

R H oder $CH_3$ bedeutet;
p etwa 1 bis etwa 12 beträgt; und
X eine funktionelle Gruppe ausgewählt aus OH, SH, $NH_2$, und N-Methylolsulfonamide bedeutet.

Beispiele von kommerziell erhältlichen Fluorharzen umfassen Evoral®, Oleophobol, Scotchguard, Tubiguard, Repellan, Ruco-Guard, Unidyne, Quecophob und Nuva, sind aber nicht darauf beschränkt.

Sofern das Fluorharz verwendet wird, ist es bevorzugt in einer Menge von 0 bis etwa 10 Gewichtsteilen, stärker bevorzugt etwa 0,5 Gewichtsteilen bis etwa 3 Gewichtsteilen, bezogen auf 100 Gewichtsteile Polyurethan, in der Schicht enthalten. Aufgrund von in den letzten Jahren aufkommenden umweltschutzrelevanten Überlegungen ist es jedoch bevorzugt, dass die Schicht, die Polyurethan umfasst, kein Fluorharz umfasst.

Die Schicht, die Polyurethan umfasst, kann weitere Hilfsstoffe umfassen. Ein optionaler Hilfsstoff ist Siliciumdioxid. Die Sterilisierbarkeit mit Gasen wie Ethylenoxid wird durch den Zusatz von Siliciumdioxid verbessert. Siliciumdioxid wird bevorzugt in Form von Kieselsäure in der Schicht eingesetzt. Die Größe der Siliciumdioxidteilchen liegt üblicherweise im Bereich von etwa 0,2 $\mu$m bis etwa 10 $\mu$m, bevorzugt etwa 0,2 $\mu$m bis etwa 5 $\mu$m. Siliciumdioxid ist bevorzugt in einer Menge von 0 bis etwa 10 Gewichtsteilen, stärker bevorzugt von etwa 1 Gewichtsteil bis etwa 5 Gewichtsteilen, bezogen auf 100 Gewichtsteile Polyurethan, in der Schicht enthalten.

Die Schicht, die Polyurethan umfasst, kann außerdem Titandioxid umfassen. Titandioxid dient als Mattierungsmittel. Die Größe der Titandioxidteilchen liegt üblicherweise im Bereich von etwa 0,2 $\mu$m bis etwa 10 $\mu$m, bevorzugt von etwa 0,2 $\mu$m bis etwa 5 $\mu$m. Titandioxid ist bevorzugt in einer Menge von 0 bis etwa 5 Gewichtsteilen, stärker bevorzugt etwa 0,2 Gewichtsteilen bis etwa 2 Gewichtsteilen, bezogen auf 100 Gewichtsteile Polyurethan, in der Schicht enthalten.

Des Weiteren kann die Schicht, die Polyurethan umfasst, weitere Additive wie Entlüfter, Fungizide, Additive zur Erhöhung der Kratzfestigkeit, Hydrophobierungsmittel, Verdicker, Rheologiehilfsmittel, Verlaufshilfsmittel, usw. enthalten. Diese Additive sind entweder Additive für die Herstellung der Schicht oder verbessern die Eigenschaften der fertigen Schicht. Der Fachmann kann sie auf Grund seines Fachwissens geeignet wählen. Die Additive sind bevorzugt in einer Menge von 0 bis etwa 20 Gewichtsteile, stärker bevorzugt etwa 0,5 Gewichtsteile bis etwa 10 Gewichtsteile, bezogen auf 100 Gewichtsteile Polyurethan, in der Schicht enthalten.

**Verfahren zur Herstellung der beschichteten Mikrofaserbahn**

Die erfindungsgemäße beschichtete Mikrofaserbahn kann nach verschiedenen Verfahren hergestellt werden. Ein bevorzugtes Verfahren wird im Folgenden beschrieben.

**(a) Bereitstellen einer Mikrofaserbahn**

Zunächst wird eine Mikrofaserbahn bereitgestellt. Die Mikrofaserbahn, die als Ausgangsmaterial verwendet wird, ist vorstehend eingehend beschrieben worden.

Die Mikrofaserbahn kann als solches in dem erfindungsgemäßen Verfahren eingesetzt werden. Sie kann jedoch, falls gewünscht, einer Vorbehandlung beispielsweise zur Erhöhung der Hydrophilie unterzogen werden. Die Vorbehandlung beispielsweise zur Erhöhung der Hydrophilie kann nach auf dem Fachgebiet bekannten Verfahren durchgeführt werden. Als Mittel zur Erhöhung der Hydrophilie können nichtionische Tenside, Fettsäurekondensate, Silicone und Gemische davon verwendet werden.

Die Mittel zur Erhöhung der Hydrophilie werden auf die Mikrofaserbahn aufgebracht. Das Aufbringungsverfahren ist nicht besonders beschränkt. In einer Ausführungsform wird die Mikrofaserbahn (beispielsweise durch Sprühen, Eintauchen, usw.) mit einer Lösung oder Dispersion der Mittel zur Erhöhung der Hydrophilie in Kontakt gebracht.

Nach dem Aufbringen der Mittel zur Erhöhung der Hydrophilie wird die erhaltene Mikrofaserbahn bevorzugt getrocknet. Die genauen Trocknungsbedingungen hängen von dem verwendeten Mittel zur Erhöhung der Hydrophilie ab. Üblicherweise wird eine Trocknungstemperatur von etwa 40 °C bis etwa 80 °C, bevorzugt von etwa 50 °C bis etwa 60 °C, gewählt werden. Die Trocknungsdauer liegt üblicherweise bei etwa 30 s bis etwa 240 s, bevorzugt bei etwa 60 s bis etwa 120 s.

Es ist wünschenswert, wenn die Mikrofaserbahn vor dem Imprägnierschritt eine Flottenaufnahme für die Imprägnierungszusammensetzung von etwa 65 Gew.-% bis etwa 85 Gew.-%, stärker bevorzugt von etwa 65 Gew.-% bis etwa 70 Gew.-%, bezogen auf das Trockengewicht der ggf. vorbehandelten Mikrofaserbahn aufweist.

**(b) Imprägnieren der Mikrofaserbahn mit einer Imprägnierungszusammensetzung**

Die Mikrofaserbahn wird mit einer Imprägnierungszusammensetzung, umfassend eine aromatische Dicarbonsäure, deren Carbonsäuregruppen jeweils mit einem Diol verestert sind, imprägniert. Geeignete aromatische Dicarbonsäuren, deren Carbonsäuregruppen jeweils mit einem Diol verestert sind, sind vorstehend beschrieben.

Die Mikrofaserbahn wird nach bekannten Verfahren imprägniert. Diese Verfahren umfassen Sprühen, Eintauchen, Ausziehverfahren, Pflatschen, und Schaumimprägnierung. Eine Tauchimprägnierung ist bevorzugt, da dies eine vollständige Imprägnierung der Mikrofaserbahn ermöglicht.

**(c) Trocknen der imprägnierten Mikrofaserbahn**

Nach der Imprägnierung wird die imprägnierte Mikrofaserbahn getrocknet, wobei die Temperatur beispielsweise im Bereich von 40 bis 120°C liegt. Die genauen Trocknungsbedingungen hängen von den verwendeten Komponenten der Imprägnierungszusammensetzung ab. Üblicherweise wird eine Trocknungstemperatur von etwa 40 °C bis etwa 110 °C, bevorzugt von etwa 50 °C bis etwa 80 °C, gewählt. Die Trocknungsdauer liegt üblicherweise bei etwa 10 s bis etwa 240 s, bevorzugt bei etwa 30 s bis etwa 120 s.

Durch die Imprägnierung mit der Imprägnierungszusammensetzung wird die Saugfähigkeit der Mikrofaserbahn eingestellt. Dadurch dass lediglich getrocknet wird, ist es einfacher zu gewährleisten, dass die Polyurethanbeschichtungszusammensetzung nicht die gesamte Mikrofaserbahn durchdringt.

Es ist wünschenswert, wenn die Mikrofaserbahn nach dem Trocknungsschritt eine Flottenaufnahme für die Beschichtungszusammensetzung von etwa 30 Gew.-% bis etwa 60 Gew.-%, stärker bevorzugt von etwa 30 Gew.-% bis etwa 50 Gew.-%, bezogen auf Trockengewicht der imprägnierten Mikrofaserbahn aufweist.

**(d) Aufbringen einer Beschichtungszusammensetzung, die Polyurethan umfasst, auf nur einer Seite der getrockneten, imprägnierten Mikrofaserbahn**

Nach dem Trocknungsschritt wird die Beschichtungszusammensetzung, die Polyurethan umfasst, auf nur einer

Seite der getrockneten, imprägnierten Mikrofaserbahn aufgebracht. Die Bestandteile der Schicht, die Polyurethan umfasst, sind vorstehend ausführlich beschrieben worden.

Die Beschichtungszusammensetzung wird bevorzugt in Form einer Lösung oder Dispersion der gewünschten Bestandteile eingesetzt. Die Konzentration des Polyurethans in der Lösung oder Dispersion ist bevorzugt im Bereich von etwa 50 Gew.-% bis etwa 80 Gew.-%, stärker bevorzugt von etwa 60 Gew.-% bis etwa 80 Gew.-%. Durch die Wahl einer viskosen Beschichtungszusammensetzung ist es einfacher sicherzustellen, dass die Schicht, die Polyurethan umfasst, nur auf einer Seite der fertigen Mikrofaserbahn vorhanden ist.

Die Beschichtungszusammensetzung wird nach bekannten Verfahren auf die getrocknete, imprägnierte Mikrofaserbahn aufgebracht. Zu diesen Verfahren gehören Walzenbeschichten, Rakeln, Streichbeschichten, Schaumbeschichten, Transferbeschichten, und Filmziehen, bevorzugt wird Rakeln verwendet.

Die Beschichtungszusammensetzung wird so aufgebracht, dass die Schicht, die Polyurethan umfasst, nur auf einer Seite der fertigen Mikrofaserbahn vorhanden ist. Figur 1 zeigt eine schematische Darstellung des Querschnitts einer fertigen erfindungsgemäßen beschichteten Mikrofaserbahn, wobei die Mikrofaserschicht der Einfachheit halber als Monoschicht dargestellt ist.

In der gezeigten Ausführungsform umfasst die Mikrofaserbahn (1) Mikrofasern (2) und elektrisch leitende Fasern (3), wobei in dieser Ausführungsform der Durchmesser der elektrisch leitenden Fasern (3) größer als der Durchmesser der Mikrofasern (2) ist. Die Imprägnierung ist in dieser Abbildung nicht gezeigt. Die Schicht (4), die Polyurethan umfasst, ist nur auf einer Seite der fertigen Mikrofaserbahn vorhanden.

Es ist selbstverständlich, dass die Beschichtungszusammensetzung beim Aufbringen auf die getrocknete, imprägnierte Mikrofaserbahn zu einem gewissen Grad in die Mikrofaserbahn eindringt. Im Rahmen der Erfindung darf die Schicht, die Polyurethan umfasst, jedoch nicht die Mikrofasern auf der Seite der Mikrofaserbahn, die der Seite, von der sie aufgebracht wurde, gegenüberliegt, abdecken. Der Durchdringungsgrad beträgt bevorzugt höchstens etwa 60 %, stärker bevorzugt höchstens etwa 40 %. Der Durchdringungsgrad beträgt bevorzugt mindestens etwa 20 %, stärker bevorzugt mindestens etwa 30 %. Im Rahmen der Erfindung wird der Durchdringungsgrad wie folgt definiert:

$$\text{Durchdringungsgrad} = \frac{d_1}{d_2} \times 100$$

$d_1$ Dicke des Teils der Mikrofaserschicht, der mit der Schicht, die Polyurethan umfasst, in Kontakt ist
d2 Dicke der gesamten Mikrofaserschicht

Die Dicken kann man durch optische Verfahren wie beispielsweise Mikroskopie messen. Ein Beispiel für ein mögliches Meßverfahren ist die Untersuchung eines Querschnitts mittels Rasterelektronenmikroskopie.

Der Durchdringungsgrad ist in Figur 1 bildlich durch die rechte geschweifte Klammer und die Angabe "x %" angedeutet. In Figur 1 beträgt sie ca. 50 %, da die Mikrofasern (weiße Kugeln) zu ca. 50 % in die Schicht, die Polyurethan umfasst, eingebettet sind.

Die Beschichtungszusammensetzung kann nach dem Aufbringen in Schritt (d) getrocknet werden. Alternativ kann auf die Trocknung verzichtet werden und die Beschichtungszusammensetzung im Rahmen der thermischen Behandlung in Schritt (e) getrocknet werden.

Üblicherweise wird eine Trocknungstemperatur von etwa 40 °C bis etwa 110 °C, bevorzugt von etwa 80 °C bis etwa 100 °C, gewählt werden. Die Trocknungsdauer liegt üblicherweise bei etwa 10 s bis etwa 240 s, bevorzugt bei etwa 10 s bis etwa 120 s.

**(e) optionales thermisches Behandeln der in Schritt (d) erhaltenen beschichteten Mikrofaserbahn**

In Schritt (e) wird die (gegebenenfalls getrocknete) beschichtete Mikrofaserbahn, die in Schritt (d) erhalten wird, optional thermisch behandelt.

Bei der thermischen Behandlung wird üblicherweise eine Temperatur von etwa 120 °C bis etwa 190 °C, bevorzugt von etwa 140 °C bis etwa 180 °C, gewählt. Es ist selbstverständlich möglich die thermische Behandlung in mehreren Stufen mit unterschiedlicher Temperatur durchzuführen. Die Dauer der thermischen Behandlung liegt üblicherweise bei etwa 10 s bis etwa 240 s, bevorzugt bei etwa 30 s bis etwa 120 s.

Strahlenschutzvorrichtung

Die erfindungsgemäße beschichtete Mikrofaserbahn kann als Abdeckung eines Strahlenschutzmaterials in einer Strahlenschutzvorrichtung verwendet werden, wobei die beschichtete Mikrofaserbahn auf mindestens einer Seite des Strahlenschutzmaterials aufgebracht ist und wobei die mit Polyurethan beschichtete Seite dem Strahlenschutzmaterial benachbart ist.

Figur 2 zeigt eine schematische Darstellung eines Querschnitts der erfindungsgemäßen Strahlenschutzvorrichtung (6). In der gezeigten Ausführungsform umfasst die Mikrofaserbahn (1) Mikrofasern (2) und elektrisch leitende Fasern (3), wobei in dieser Ausführungsform der Durchmesser der elektrisch leitenden Fasern (3) größer als der Durchmesser der Mikrofasern (2) ist. Die Imprägnierung ist in dieser Abbildung nicht gezeigt. Die Schicht (4), die Polyurethan umfasst, ist nur auf einer Seite der fertigen Mikrofaserbahn (1) vorhanden.

Die erfindungsgemäße Mikrofaserbahn (1) ist in der gezeigten Ausführungsform auf beide Seiten des Strahlenschutzmaterials (5) aufgebracht, wobei die Schicht (4), die Polyurethan umfasst, jeweils dem Strahlenschutzmaterial (5) benachbart ist.

Als Strahlenschutzvorrichtungen können alle Vorrichtungen genannt werden, die Personen oder Gegenstände vor schädlicher Strahlung, insbesondere Röntgenstrahlung, UV-Strahlung, Infrarot-Strahlung, und radioaktiver Strahlung, besonders bevorzugt Röntgenstrahlung, schützen. Beispiele umfassen Schürzen, Handschuhe, Schirme, Vorhänge, Mäntel, Abdecktücher, Abdeckmaterialien, Augenschutzprodukte und Überzieher, sind aber nicht darauf beschränkt. Durch ihre Flexibilität und ihren angenehmen haptischen Eigenschaften eignet sich die erfindungsgemäße beschichtete Mikrofaserbahn besonders für flexible Strahlenschutzvorrichtungen und/oder Strahlenschutzvorrichtungen, die von Personen getragen werden.

Im Rahmen der Erfindung können alle Arten von Strahlenschutzmaterial verwendet werden. Die Art des Strahlenschutzmaterials wird von der abzuschirmenden Strahlung abhängen und ist nicht besonders beschränkt. Beispielhaft kann Strahlenschutzmaterial auf der Basis von Blei oder Bleioxid erwähnt werden. Bleifreies Strahlenschutzmaterial kann ebenfalls verwendet werden. Bleifreies Strahlenschutzmaterial ist beispielsweise in DE 10 2004 001 328 A, WO 2005/024846 A, WO 2005/023116 A, DE 10 2006 028 958 A, WO 2004/017332 A und DE 10 2005 034 384 offenbart. Kombinationen von Strahlenschutzmaterial sind auch möglich. Das Strahlenschutzmaterial kann eine oder mehrere Lagen umfassen.

Bei der Herstellung einer Strahlenschutzvorrichtung wird die erfindungsgemäße beschichtete Mikrofaserbahn auf mindestens einer Seite des Strahlenschutzmaterials aufgebracht. Üblicherweise wird das Strahlenschutzmaterial von der erfindungsgemäßen beschichteten Mikrofaserbahn umhüllt. Die Mikrofaserbahn und das Strahlenschutzmaterial können auf bekannte Weise, beispielsweise durch Nähen, Kleben, Tapen, Kaschieren oder Laminieren, miteinander verbunden werden. Wenn die Mikrofaserbahn und das Strahlenschutzmaterial, beispielsweise durch Kaschieren oder Laminieren, zu einem Verbundmaterial verarbeitet werden, können sie auch anschließend durch konfektionstechnische Verfahren, wie Schneiden, Stanzen, Wasserstrahlschneiden, Formen oder Laserstrahlschneiden zu den Endprodukten verarbeitet werden.

Die erfindungsgemäße Mikrofaserbahn schützt das Strahlenschutzmaterial. Insbesondere wird das Strahlenschutzmaterial geschützt vor:

- mechanischer Einwirkung;
- Penetration durch Keimen (wie Bakterien-, Viren- und Pilzen);
- chemischer Einwirkung beispielsweise durch Reinigungs- und Desinfektionsmittel;
- Lichteinwirkung; und/oder
- Eindringen von Körperflüssigkeiten, wie Blut, Urin oder Schweiß.

Die beschichtete Mikrofaserbahn verleiht durch ihren textilen Charakter zudem den Strahlenschutzvorrichtungen ein angenehmes Oberflächengefühl, was vor allem Kleidungsstücken ein angenehmes Tragegefühl verleiht.

Im Gegensatz zu konventionellen Strahlenschutzvorrichtungen, bei denen eine mit Polyurethan beschichtete Seite dem Strahlenschutzmaterial abgewandt ist, wird die erfindungsgemäße beschichtete Mikrofaserbahn so angeordnet, dass die mit Polyurethan beschichtete Seite dem Strahlenschutzmaterial benachbart ist. Bei der konventionellen Anordnung ist die mit Polyurethan beschichtete Seite folglich nach außen gewandt und somit starken physischen Belastungen ausgesetzt. Dadurch kommt es zu verstärktem Verschleiß und Abrieb. Durch die erfindungsgemäße Anordnung, bei der die mit Polyurethan beschichtete Seite nach innen gewandt ist, ist die physische Belastung deutlich geringer. Überraschenderweise weist die beschichtete Mikrofaserbahn bei der erfindungsgemäßen Anordnung eine hohe Schnitt- und Reißfestigkeit auf, so dass ihre Gebrauchseigenschaften denen von konventionellen Materialien deutlich überlegen sind.

Die vorliegende Erfindung kann durch die folgenden Punkte 1 bis 22 zusammengefasst werden:

1. Beschichtete Mikrofaserbahn, umfassend:

(i) eine Mikrofaserbahn, die einen oder mehrere Polyester und/oder ein oder mehrere Polyamide und/oder ein oder mehrere Polyamid-Polyester-Copolymere umfasst und mit einer Imprägnierungszusammensetzung umfassend eine aromatische Dicarbonsäure, deren Carbonsäuregruppen jeweils mit einem Diol verestert sind,

imprägniert ist; und
(ii) eine Schicht, die Polyurethan umfasst, welches nur auf einer Seite der Mikrofaserbahn vorhanden ist.

2. Beschichtete Mikrofaserbahn gemäß Punkt 1, wobei die Dicke der Schicht, die Polyurethan umfasst, etwa 3 $g/m^2$ bis etwa 50 $g/m^2$ beträgt.

3. Beschichtete Mikrofaserbahn gemäß Punkt 1 oder 2, wobei die Schicht, die Polyurethan umfasst, des Weiteren Fluorharz in einer Menge von etwa 3 Gewichtsteilen bis etwa 30 Gewichtsteilen, bezogen auf 100 Gewichtsteile Polyurethan, umfasst.

4. Beschichtete Mikrofaserbahn gemäß einem der Punkte 1 bis 3, wobei die Schicht, die Polyurethan umfasst, des Weiteren Siliciumdioxid in einer Menge von etwa 1 Gewichtsteil bis etwa 10 Gewichtsteilen, bezogen auf 100 Gewichtsteile Polyurethan, umfasst.

5. Beschichtete Mikrofaserbahn gemäß einem der Punkte 1 bis 4, wobei die aromatische Dicarbonsäure, deren Carbonsäuregruppen jeweils mit einem Diol verestert sind, eine Verbindung der Formel (I) ist:

HO-($C_{1-6}$-Alkylen)-O-C(O)-(aromatische Gruppe)-C(O)-O-($C_{1-6}$-Alkylen)-OH (I)

wobei die $C_{1-6}$-Alkylengruppen unabhängig gegebenenfalls mit einem oder mehreren Fluoratomen substituiert sind, und
die aromatische Gruppe vorzugsweise bis zu 30 Kohlenstoffatome sowie gegebenenfalls bis zu 10 Heteratome, ausgewählt aus N, O und S, enthält.

6. Beschichtete Mikrofaserbahn gemäß Punkt 5, wobei die $C_{1-6}$-Alkylengruppe nicht mit einem oder mehreren Fluoratomen substituiert ist.

7. Beschichtete Mikrofaserbahn gemäß Punkt 5 oder 6, wobei die aromatische Gruppe bis zu 12 Kohlenstoffatome und gegebenenfalls bis zu 4 Heteroatome, ausgewählt aus N, O und S, enthält.

8. Beschichtete Mikrofaserbahn gemäß einem der Punkte 5 bis 7, wobei die aromatische Gruppe Phenylen oder Naphthylen ist.

9. Beschichtete Mikrofaserbahn gemäß einem der Punkte 5 bis 8, wobei die Verbindung der Formel (I) eine Verbindung der folgenden Formel (II) ist:

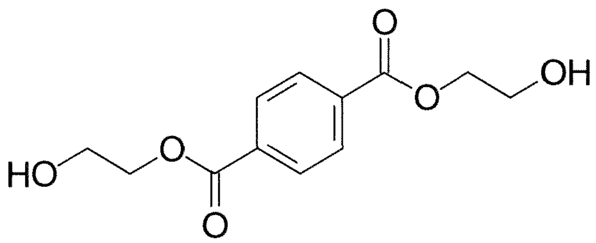

(II)

10. Beschichtete Mikrofaserbahn gemäß einem der Punkte 5 bis 8, wobei die Verbindung der Formel (I) eine Verbindung der folgenden Formel (III) ist:

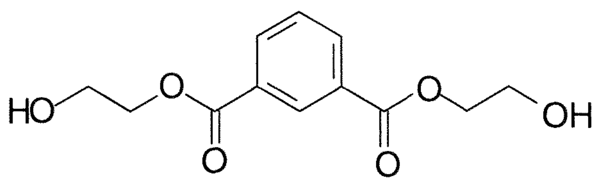

(III)

11. Beschichtete Mikrofaserbahn gemäß einem der Punkte 1 bis 10, wobei die Imprägnierungszusammensetzung

zusätzlich zu der aromatischen Dicarbonsäure, deren Carbonsäuregruppen jeweils mit einem Diol verestert sind weiterhin eines oder mehrere, ausgewählt aus:

a) einem oder mehreren Silikonen, bevorzugt einem oder mehreren Polydimethylsiloxanen, und
b) einem oder mehreren Wachsen
umfasst.

12. Beschichtete Mikrofaserbahn gemäß Punkt 11, wobei die einen oder mehreren Wachse ein oder mehrere mikrokristalline Paraffine umfassen.

13. Beschichtete Mikrofaserbahn gemäß Punkt 11 oder 12, wobei die Imprägnierungszusammensetzung sowohl ein oder mehrere Polydimethylsiloxane als auch ein oder mehrere Wachse umfasst.

14. Beschichtete Mikrofaserbahn gemäß einem der Punkte 1 bis 13, wobei die Mikrofaserbahn einen oder mehrere Polyester umfasst.

15. Imprägnierungsformulierung umfassend:

(I) Wasser,
(II) eine aromatische Dicarbonsäure, deren Carbonsäuregruppen jeweils mit einem Diol verestert sind,
(III) ein oder mehrere Silikone, bevorzugt umfassend ein oder mehrere Polydimethylsiloxane, und
(IV) ein oder mehrere Wachse, bevorzugt umfassend ein oder mehrere mikrokristalline Paraffine.

16. Verfahren zur Herstellung einer beschichteten Mikrofaserbahn, welches die folgenden Schritte umfasst:

(a) Bereitstellen einer Mikrofaserbahn;
(b) Imprägnieren der Mikrofaserbahn mit einer Imprägnierungszusammensetzung, umfassend eine aromatische Dicarbonsäure, deren Carbonsäuregruppen jeweils mit einem Diol verestert sind, oder mit einer Imprägnierungsformulierung wie in Punkt 15 definiert;
(c) Trocknen der imprägnierten Mikrofaserbahn;
(d) Aufbringen einer Beschichtungszusammensetzung, die Polyurethan umfasst, auf nur einer Seite der getrockneten, imprägnierten Mikrofaserbahn; und
(e) optional, thermisches Behandeln der in Schritt (d) erhaltenen beschichteten Mikrofaserbahn.

17. Verfahren gemäß Punkt 16, wobei die Trocknung in Schritt (c) bei einer Temperatur im Bereich von etwa 40 °C bis etwa 110 °C für eine Dauer von etwa 10 s bis etwa 240 s durchgeführt wird.

18. Verfahren gemäß Punkt 16 oder 1617, wobei die thermische Behandlung in Schritt (e) bei einer Temperatur im Bereich von etwa 120 °C bis etwa 190 °C für eine Dauer von etwa 10 s bis etwa 240 s durchgeführt wird.

19. Verwendung der beschichteten Mikrofaserbahn nach einem der Punkte 1 bis 14 oder der beschichteten Mikrofaserbahn, die gemäß dem Verfahren nach einem der Punkte 16 bis 18 erhältlich ist, als Abdeckung eines Strahlenschutzmaterials;
wobei die beschichtete Mikrofaserbahn auf mindestens einer Seite des Strahlenschutzmaterials aufgebracht ist und wobei die mit Polyurethan beschichtete Seite dem Strahlenschutzmaterial benachbart ist.

20. Strahlenschutzvorrichtung umfassend:

($\alpha$) ein Strahlenschutzmaterial; und
($\beta$) die beschichtete Mikrofaserbahn nach einem der Punkte 1 bis 14 oder die beschichtete Mikrofaserbahn, die gemäß dem Verfahren nach einem der Punkte 16 bis 18 erhältlich ist,
wobei die beschichtete Mikrofaserbahn auf mindestens einer Seite des Strahlenschutzmaterials aufgebracht ist und wobei die mit Polyurethan beschichtete Seite dem Strahlenschutzmaterial benachbart ist.

21. Strahlenschutzvorrichtung gemäß Punkt 20, wobei das Strahlenschutzmaterial zur Abschirmung von Röntgenstrahlung geeignet ist.

22. Strahlenschutzvorrichtung gemäß Punkt 20 oder 21, wobei das Strahlenschutzmaterial kein Blei enthält.

23. Strahlenschutzvorrichtung gemäß einem der Punkte 20 bis 22, wobei die beschichtete Mikrofaserbahn auf beiden Seiten des Strahlenschutzmaterials aufgebracht ist und wobei jeweils die mit Polyurethan beschichteten Seiten dem Strahlenschutzmaterial benachbart sind.

Die Erfindung wird anhand des folgenden Beispiels erläutert. Die Erfindung ist jedoch nicht auf diese Ausführungsform beschränkt.

**BEISPIEL**

Eine Mikrofaserbahn wurde aus Polyester-Mikrofasern mit einer Faserstärke von 1 dtex und kohlenstoffhaltigen Fasern (Belltron B31, erhältlich von Kanebo Gohsen Ltd., Japan) hergestellt. Die Fasern wurden zu einer Leinwand mit ca. 70 Kettfäden/cm und ca. 37 Schussfäden/cm mit einem Flächengewicht von 100 g/$m^2$ verarbeitet. Die kohlenstoffhaltigen elektrisch leitenden Fasern wurden in Form eines Gitters mit den Maßen 5 $\times$ 5 mm eingearbeitet.

Die Mikrofaserbahn hatte eine Luftdurchlässigkeit von ca. 9 l/min pro $dm^2$ (DIN EN ISO 9237, Prüffläche 20 $cm^2$, 125 Pa) und einen elektrostatischen Oberflächenwiderstand von ca. $1 \times 10^8$ Ohm (nach DIN 100015-1 bei 25 % rel. Luftfeuchte und 23 °C). Die Reißfestigkeiten betrugen ca. 850 N in Kette und ca. 650 N im Schuss.

Für das Beispiel wurde die Mikrofaserbahn über einen Spannrahmen geführt.

Zur Behandlung der Mikrofaserbahn wurde folgendes Emulsions-Gemisch einer Imprägnierungslösung hergestellt:

60,5 Gew.% Wasser
4,0 Gew.-% Bis(2-hydroxyethyl) terephthalat
6,5 Gew.-% Korasilon® Öl R 0,5
24,5 Gew.-% Bienenwachsemulsion 32%ig
4,5 Gew.-% Polysorbat 60 (Emulgator)

Die Imprägnierungslösung wurde über einen Leitstrahlmischer emulgiert.

Die Behandlung, hier Foulardierung, erfolgte mit 65 g/L der Imprägnierungslösung. Die Mikrofaserbahn wurde 90 s bei 60 °C getrocknet.

Nach der Trocknung wurde eine polyurethanhaltige Beschichtung auf die Mikrofaserbahn aufgerakelt. Die Beschichtungszusammensetzung wies die folgende Zusammensetzung auf:

50 Teile Impranil DLP-R, Bayer (Polymerdispersion)
0,2 Teile Agitan 218, Münzing Chemie (Entlüfter)
0,4 Teile Afrotin FG, Schill + Seilacher (Fungizid)
0,4 Teile Byk 333, Byk Chemie (Additiv zur Erhöhung der Kratzbeständigkeit)
0,8 Teile Tegophobe 1650, Degussa (Hydophobierungsmittel)
1,2 Teile kolloidale Kieselsäure
41,7 Teile Wasser
0,3 Teile Rheolate 255, Elementis (Verdicker)
4,2 Teile Evoral, Schill+Seilacher (Fluorpolymer)
0,8 Teile Hombitec RM 400, Sachtleben Chemie (Mattierungsmittel)

Die Anmischung erfolgte unter Zugabe in der obengenannten Reihenfolge mit Hilfe eines Leistrahlmischers. Die Rührzeit betrug 5 Minuten. Die hergestellte Paste wurde mittels einer Luftrakel flächig als geschlossener Film auf die Mikrofaserbahn aufgebracht.

Die beschichtete Mikrofaserbahn wurde in einem Spannrahmen in fünf Feldern mit je 3 m Länge und einer Gesamtzeit von 2 min stufenweise getrocknet.

Trocknung Feld 1: 80 °C
Trocknung Feld 2: 120 °C
Trocknung Felder 3 bis 5: 160 °C

Die erhaltene Mikrofaserbahn wurde nach DIN EN 13795-2 untersucht, um ihre Eignung als Abdeckung von Röntgenschutzmaterial im OP Bereich zu klären. (KbE = Koloniebildende Einheiten).

**Barriereeigenschaften:**

Bakterienpenetration trocken: log10KbE: 0 (DIN EN ISO 13795)
Flüssigkeitsdurchtritt: > 200 mbar (DIN EN ISO 811)
Wasserabweisung > 70 (AATCC 22)

**Reinheit:**

mikrobiologisch: log10(KbE/dm$^2$): < 0,3 (DIN EN ISO 13795)
Partikuläres Material: Index Partikuläres Material < 3,3 (DIN EN IOS 13795)
Partikelfreisetzung: log10-Partikel (2 - 25 μm) < 3,7 (DIN EN ISO 13795)

**Festigkeit:**

Weiterreißfestigkeit: trocken: > 10 N/5 cm (DIN EN ISO 13937-2)
Weiterreißfestigkeit: nass: > 10 N/5 cm (DIN EN ISO 13937-2)
Berstfestigkeit trocken > 600 kPa (DIN EN ISO 13795)
Berstfestigkeit nass: > 600 kPa (DIN EN ISO 13795)

Die Messwerte zeigen, dass das erfindungsgemäße Material hervorragend als Textil im OP-Bereich eingesetzt werden kann.

Das in Beispiel 1 von WO 2005/024846 hergestellte bleifreie Strahlenschutzmaterial wurde in Form einer Strahlenschutzschürze geschnitten. Die vorstehend hergestellte beschichtete Mikrofaserbahn wurde entsprechend zugeschnitten und beidseitig auf das Strahlenschutzmaterial gelegt, wobei die mit Polyurethan beschichtete Seite dem Strahlenschutzmaterial zugewandt war. Die Mikrofaserbahnen und das Strahlenschutzmaterial wurden miteinander vernäht, so dass eine Strahlenschutzschürze erhalten wurde. Die Strahlenschutzschürze vermittelte durch die Verwendung der beschriebenen Mikrofaserbahn ein angenehmes Tragegefühl. Hautreizungen wurden vermieden. Außerdem dient die beschriebene Mikrofaserbahn als Schutzbarriere für das sensible Strahlenschutz-Inlay. Die Strahlenschutzschürze wies eine hervorragende Dichtheit gegen Blut, Urin und Mikroorganismen auf. Sie konnte außerdem ohne Beschädigung durch Ethylenoxid sterilisiert werden. Folglich ist die Strahlenschutzschürze sehr gut für den Einsatz im medizinischen Bereich geeignet.

## Patentansprüche

**1.** Beschichtete Mikrofaserbahn, umfassend:

(i) eine Mikrofaserbahn, die einen oder mehrere Polyester und/oder ein oder mehrere Polyamide und/oder ein oder mehrere Polyamid-Polyester-Copolymere umfasst und mit einer Imprägnierungszusammensetzung umfassend

(a) eine aromatische Dicarbonsäure, deren Carbonsäuregruppen jeweils mit einem Diol verestert sind, und/oder
(b) ein oder mehrere Oligomere jeweils enthaltend 2 bis 10 Wiederholungseinheiten bestehend aus einem Monoester einer aromatischen Dicarbonsäure mit einem Diol,
imprägniert ist; und

(ii) eine Schicht, die Polyurethan umfasst, welches nur auf einer Seite der Mikrofaserbahn vorhanden ist.

**2.** Beschichtete Mikrofaserbahn gemäß Anspruch 1, wobei die aromatische Dicarbonsäure, deren Carbonsäuregruppen jeweils mit einem Diol verestert sind, eine Verbindung der Formel (I) ist:

$$HO\text{-}(C_{1\text{-}6}\text{-Alkylen})\text{-}O\text{-}C(O)\text{-(aromatische Gruppe)}\text{-}C(O)\text{-}O\text{-}(C_{1\text{-}6}\text{-Alkylen})\text{-}OH \quad (I)$$

wobei die $C_{1-6}$-Alkylengruppen unabhängig gegebenenfalls mit einem oder mehreren Fluoratomen substituiert sind, und
die aromatische Gruppe vorzugsweise bis zu 30 Kohlenstoffatome sowie gegebenenfalls bis zu 10 Heteratome, ausgewählt aus N, O und S, enthält.

**3.** Beschichtete Mikrofaserbahn gemäß Anspruch 2, wobei die aromatische Gruppe bis zu 12 Kohlenstoffatome und gegebenenfalls bis zu 4 Heteroatome, ausgewählt aus N, O und S, enthält, wobei die aromatische Gruppe bevorzugt Phenylen oder Naphthylen ist.

**4.** Beschichtete Mikrofaserbahn gemäß Anspruch 2 oder 3, wobei die Verbindung der Formel (I) eine Verbindung der folgenden Formel (II) ist:

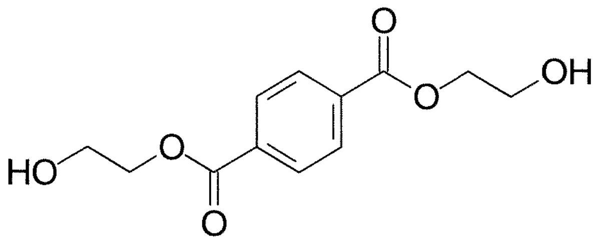

(II)

**5.** Beschichtete Mikrofaserbahn gemäß Anspruch 2 oder 3, wobei die Verbindung der Formel (I) eine Verbindung der folgenden Formel (III) ist:

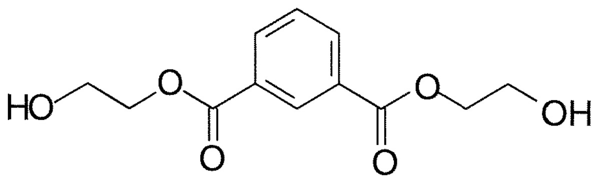

(III)

**6.** Beschichtete Mikrofaserbahn gemäß einem der Ansprüche 1 bis 5, wobei die Imprägnierungszusammensetzung zusätzlich zu der aromatischen Dicarbonsäure, deren Carbonsäuregruppen jeweils mit einem Diol verestert sind weiterhin eines oder mehrere, ausgewählt aus:

a) einem oder mehreren Silikonen, bevorzugt einem oder mehreren Polydimethylsiloxanen, und
b) einem oder mehreren Wachsen
umfasst.

**7.** Beschichtete Mikrofaserbahn gemäß einem der Ansprüche 1 bis 6, wobei die Mikrofaserbahn einen oder mehrere Polyester umfasst.

**8.** Imprägnierungsformulierung umfassend:

(I) Wasser,
(II)

(a) eine aromatische Dicarbonsäure, deren Carbonsäuregruppen jeweils mit einem Diol verestert sind, und/oder
(b) ein oder mehrere Oligomere jeweils enthaltend 2 bis 10 Wiederholungseinheiten bestehend aus einem Monoester einer aromatischen Dicarbonsäure mit einem Diol,

(III) ein oder mehrere Silikone, bevorzugt umfassend ein oder mehrere Polydimethylsiloxane, und
(IV) ein oder mehrere Wachse, bevorzugt umfassend ein oder mehrere mikrokristalline Paraffine.

9. Verfahren zur Herstellung einer beschichteten Mikrofaserbahn, welches die folgenden Schritte umfasst:

(a) Bereitstellen einer Mikrofaserbahn, die einen oder mehrere Polyester und/oder ein oder mehrere Polyamide und/oder ein oder mehrere Polyamid-Polyester-Copolymere umfasst;
(b) Imprägnieren der Mikrofaserbahn mit einer Imprägnierungsformulierung, umfassend eine aromatische Dicarbonsäure, deren Carbonsäuregruppen jeweils mit einem Diol verestert sind, oder mit einer Imprägnierungsformulierung wie in Anspruch 8 definiert;
(c) Trocknen der imprägnierten Mikrofaserbahn;
(d) Aufbringen einer Beschichtungszusammensetzung, die Polyurethan umfasst, auf nur einer Seite der getrockneten, imprägnierten Mikrofaserbahn; und
(e) optional, thermisches Behandeln der in Schritt (d) erhaltenen beschichteten Mikrofaserbahn.

10. Verwendung der beschichteten Mikrofaserbahn nach einem der Ansprüche 1 bis 7 oder der beschichteten Mikrofaserbahn, die gemäß dem Verfahren nach Anspruch 9 erhältlich ist, als Abdeckung eines Strahlenschutzmaterials; wobei die beschichtete Mikrofaserbahn auf mindestens einer Seite des Strahlenschutzmaterials aufgebracht ist und wobei die mit Polyurethan beschichtete Seite dem Strahlenschutzmaterial benachbart ist.

11. Strahlenschutzvorrichtung umfassend:

($\alpha$) ein Strahlenschutzmaterial; und
($\beta$) die beschichtete Mikrofaserbahn nach einem der Ansprüche 1 bis 7 oder die beschichtete Mikrofaserbahn, die gemäß dem Verfahren nach Anspruch 9 erhältlich ist,
wobei die beschichtete Mikrofaserbahn auf mindestens einer Seite des Strahlenschutzmaterials aufgebracht ist und wobei die mit Polyurethan beschichtete Seite dem Strahlenschutzmaterial benachbart ist.

## Claims

1. A coated microfibrous web comprising:

(i) a microfibrous web comprising one or more polyesters and/or one or more polyamides and/or one or more polyamide-polyester copolymers and impregnated with an impregnating composition comprising

(a) an aromatic dicarboxylic acid, the carboxylic acid groups of which are each esterified with a diol, and/or
(b) one or more oligomers, each containing 2 to 10 repeating units consisting of a monoester of an aromatic dicarboxylic acid with a diol;
and

(ii) a layer comprising polyurethane which is present on only one side of the microfibrous web.

2. The coated microfibrous web as claimed in claim 1, wherein the aromatic dicarboxylic acid, the carboxylic acid groups of which are each esterified with a diol, is a compound of formula (I):

$$\text{HO-(C}_{1\text{-}6}\text{-alkylene)-O-C(O)-(aromatic group)-C(O)-O-(C}_{1\text{-}6}\text{-alkylene)-OH} \quad \text{(I)}$$

wherein the $C_{1-6}$-alkylene groups are independently optionally substituted with one or more fluorine atoms, and the aromatic group preferably contains up to 30 carbon atoms as well as optionally up to 10 hetero atoms, selected from N, O, and S.

3. The coated microfibrous web as claimed in claim 2, wherein the aromatic group contains up to 12 carbon atoms and optionally up to 4 hetero atoms, selected from N, O, and S, wherein the aromatic group is preferably phenylene or naphthylene.

4. The coated microfibrous web as claimed in claim 2 or 3, wherein the compound of formula (I) is a compound of the following formula (II):

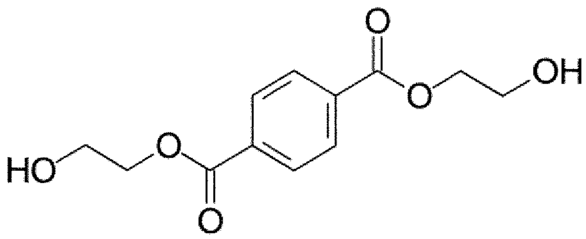

(II)

5. The coated microfibrous web as claimed in claim 2 or 3, wherein the compound of formula (I) is a compound of the following formula (III):

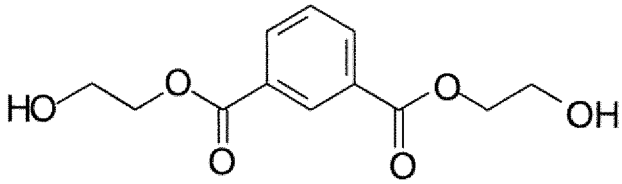

(III)

6. The coated microfibrous web as claimed in any one of claims 1 to 5, wherein the impregnating composition in addition to the aromatic dicarboxylic acid, the carboxylic acid groups of which are each esterified with a diol, further comprises one or more selected from:

a) one or more silicones, preferably one or more polydimethylsiloxanes, and
b) one or more waxes.

7. The coated microfibrous web as claimed in any one of claims 1 to 6, wherein the microfibrous web comprises one or more polyesters.

8. An impregnating formulation, comprising:

(I) water,
(II)

(a) an aromatic dicarboxylic acid, the carboxylic acid groups of which are each esterified with a diol, and/or
(b) one or more oligomers, each containing 2 to 10 repeating units consisting of a monoester of an aromatic dicarboxylic acid with a diol,

(III)one or more silicones, preferably comprising one or more polydimethylsiloxanes,
and
(IV)one or more waxes, preferably comprising one or more microcrystalline paraffins.

9. A process for producing a coated microfibrous web, comprising the following steps of:

(a) providing a microfibrous web comprising one or more polyesters and/or one or more polyamides and/or one or more polyamide-polyester copolymers;
(b) impregnating the microfibrous web with an impregnating formulation comprising an aromatic dicarboxylic acid, the carboxylic acid groups of which are each esterified with a diol, or with an impregnating formulation as defined in claim 8;
(c) drying the impregnated microfibrous web;
(d) applying a coating composition comprising polyurethane on only one side of the dried impregnated microfibrous web; and
(e) optionally, thermal treatment of the coated microfibrous web obtained in step (d).

10. Use of the coated microfibrous web as claimed in any one of claims 1 to 7 or of the coated microfibrous web obtainable in accordance with the process as claimed in claim 9 as a cover of a radiation protection material;

wherein the coated microfibrous web is applied on at least one side of the radiation protection material and wherein the side coated with polyurethane is adjacent to the radiation protection material.

**11.** A radiation protection device comprising:

($\alpha$) a radiation protection material; and
($\beta$) the coated microfibrous web as claimed in any one of claims 1 to 7 or the coated microfibrous web obtainable in accordance with the process as claimed in claim 9;
wherein the coated microfibrous web is applied on at least one side of the radiation protection material and wherein the side coated with polyurethane is adjacent to the radiation protection material.

## Revendications

**1.** Bande de microfibres revêtue, comprenant :

(i) une bande de microfibres qui comprend un ou plusieurs polyesters et/ou un ou plusieurs polyamides et/ou un ou plusieurs copolymères polyamide - polyester et est imprégnée avec une composition d'imprégnation comprenant :

(a) un acide dicarboxylique aromatique, dont les groupes acides carboxyliques sont respectivement estérifiés avec un diol, et/ou
(b) un ou plusieurs oligomères contenant respectivement 2 à 10 unités répétitives constituées d'un monoester d'un acide dicarboxylique aromatique avec un diol, et

(ii) une couche qui comprend du polyuréthane, qui est présente seulement sur une face de la bande de microfibres.

**2.** Bande de microfibres revêtue selon la revendication 1, dans laquelle l'acide dicarboxylique aromatique, dont les groupes acides carboxyliques sont respectivement estérifiés avec un diol, est un composé de formule (I) :

$$\text{HO-(alkylène en } C_{1\text{-}6}\text{)-O-C(O)-(groupe aromatique)-C(O)-O-(alkylène en } C_{1\text{-}6}\text{)-OH} \quad (I)$$

dans laquelle les groupes alkylènes en $C_{1-6}$ sont indépendamment éventuellement substitués avec un ou plusieurs atomes de fluor, et
le groupe aromatique contient de préférence jusqu'à 30 atomes de carbone et éventuellement jusqu'à 10 hétéroatomes choisis parmi N, O et S.

**3.** Bande de microfibres revêtue selon la revendication 2, dans laquelle le groupe aromatique contient jusqu'à 12 atomes de carbone et éventuellement jusqu'à 4 hétéroatomes choisis parmi N, O et S, le groupe aromatique étant de préférence phénylène ou naphtylène.

**4.** Bande de microfibres revêtue selon la revendication 2 ou 3, dans laquelle le composé de formule (I) est un composé de formule (II) suivante :

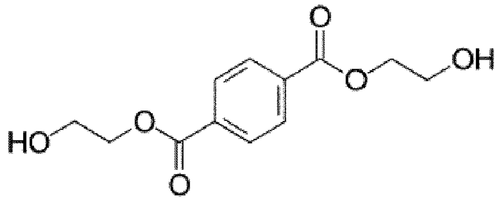

(II)

**5.** Bande de microfibres revêtue selon la revendication 2 ou 3, dans laquelle le composé de formule (I) est un composé de formule (III) suivante :

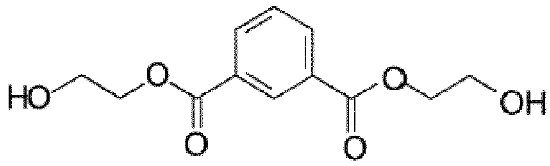

(III)

**6.** Bande de microfibres revêtue selon l'une des revendications 1 à 5, dans laquelle la composition d'imprégnation comprend, en plus de l'acide dicarboxylique aromatique, dont les groupes acides carboxyliques sont estérifiés respectivement avec un diol, en outre un ou plusieurs éléments choisis parmi :

a) une ou plusieurs silicones, de préférence un ou plusieurs polydiméthylsiloxanes, et
b) une ou plusieurs cires.

**7.** Bande de microfibres revêtue selon l'une des revendications 1 à 6, la bande de microfibres comprenant un ou plusieurs polyesters.

**8.** Formulation d'imprégnation, comprenant :

(I) de l'eau,
(II)

(a) un acide dicarboxylique aromatique, dont les groupes acides carboxyliques sont estérifiés respectivement avec un diol, et/ou
(b) un ou plusieurs oligomères contenant respectivement 2 à 10 unités répétitives constituées d'un monoester d'un acide dicarboxylique aromatique avec un diol,

(III) une ou plusieurs silicones, de préférence comprenant un ou plusieurs polydiméthylsiloxanes, et
(IV) une ou plusieurs cires, de préférence comprenant une ou plusieurs paraffines microcristallines.

**9.** Procédé de fabrication d'une bande de microfibres revêtue, qui comprend les étapes suivantes de :

(a) mettre à disposition une bande de microfibres, qui comprend un ou plusieurs polyesters et/ou un ou plusieurs polyamides et/ou un ou plusieurs copolymères polyamide - polyester ;
(b) imprégner la bande de microfibres avec une formulation d'imprégnation comprenant un acide dicarboxylique aromatique, dont les groupes acides carboxyliques sont estérifiés respectivement avec un diol, ou avec une formulation d'imprégnation telle que définie à la revendication 8 ;
(c) sécher la bande de microfibres imprégnée ;
(d) déposer une composition de revêtement qui comprend du polyuréthane seulement sur une face de la bande de microfibres imprégnée séchée ; et
(e) optionnellement traiter thermiquement la bande de microfibres revêtue obtenue à l'étape (d).

**10.** Utilisation de la bande de microfibres revêtue selon l'une des revendications 1 à 7 ou de la bande de microfibres revêtue qui peut être obtenue par le procédé selon la revendication 9, en tant que recouvrement d'un matériau de protection contre le rayonnement ;
dans laquelle la bande de microfibres revêtue est déposée sur au moins une face du matériau de protection contre le rayonnement, et dans laquelle la face revêtue avec du polyuréthane est adjacente au matériau de protection contre le rayonnement.

**11.** Dispositif de protection contre le rayonnement, comprenant :

($\alpha$) un matériau de protection contre le rayonnement ; et
($\beta$) la bande de microfibres revêtue selon l'une des revendications 1 à 7 ou la bande de microfibres revêtue qui peut être obtenue par le procédé selon la revendication 9,
dans lequel la bande de microfibres revêtue est déposée sur au moins une face du matériau de protection contre le rayonnement et dans lequel la face revêtue avec du polyuréthane est adjacente au matériau de protection contre le rayonnement.

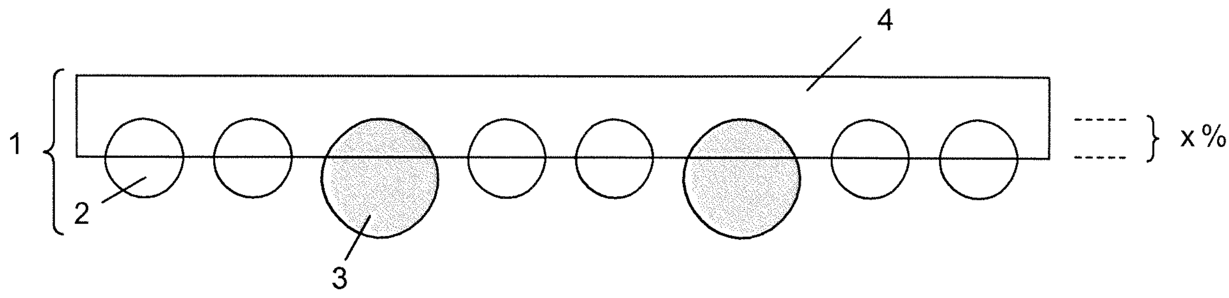


Figur 1

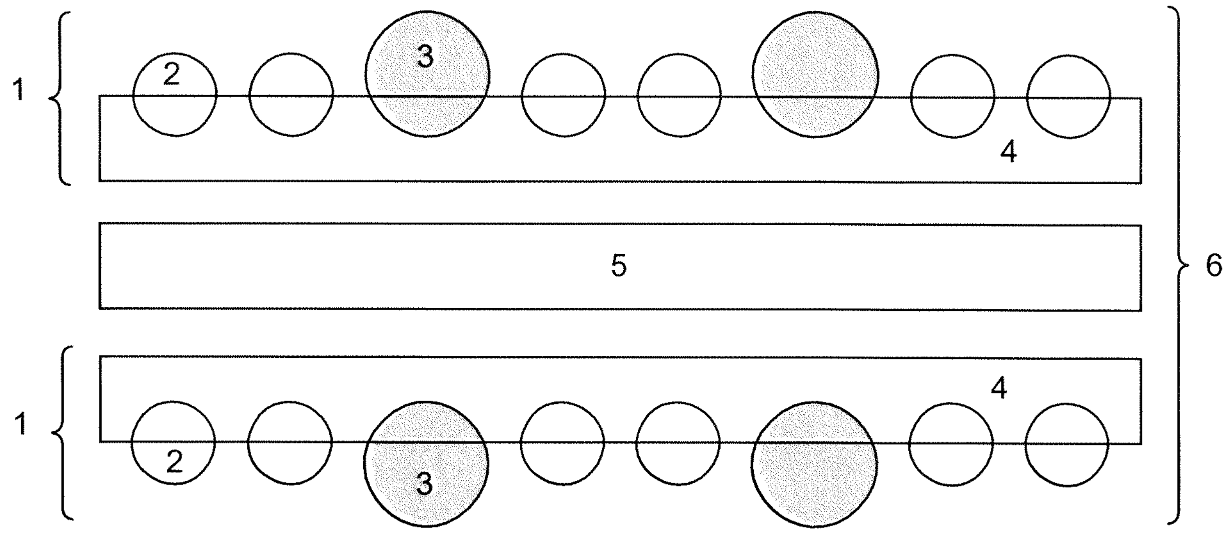


Figur 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4923741 A
- GB 2118410 A
- WO 2011018459 A
- WO 2011000772 A1
- DE 10313681 A
- EP 1198491 A
- EP 922065 A
- EP 38094 A
- EP 38582 A
- EP 39524 A
- DE 102004001328 A
- WO 2005024846 A
- WO 2005023116 A
- DE 102006028958 A
- WO 2004017332 A
- DE 102005034384


### In der Beschreibung aufgeführte Nicht-Patentliteratur


- **NASSER.** Journal of Chromatography A. 2005, vol. 1097, 130-137
- Ullmanns Encyklopädie der Technischen Chemie. Verlag Chemie, 1980, vol. 19, 39-54
- Ullmanns Encyclopedia of Industrial Chemistry. VCH Verlag, 1992, vol. A21, 179-206
- **STOECKHERT.** Kunststofflexikon. Carl Hanser Verlag, 1992, 425-428
- **SAECHTLING.** Kunststoff-Taschenbuch. Carl Hanser-Verlag, 1998, 465-478
- *CHEMICAL ABSTRACTS,* 1185-55-3